Europäisches Patentamt

European Patent Office

Office européen des brevets

(19)

(11) Veröffentlichungsnummer : **0 046 311**
**B2**

(12) # NEUE EUROPÄISCHE PATENTSCHRIFT

(45) Veröffentlichungstag der neuen Patentschrift :
28.06.89

(51) Int. Cl.⁴ : **B 23 F   9/14**

(21) Anmeldenummer : **81200714.4**

(22) Anmeldetag : **24.06.81**

(54) Verfahren und Messerkopf zum Erzeugen von Zahnrädern mit längsballigen Zähnen.

(30) Priorität : **12.08.80 CH 6092/80**

(43) Veröffentlichungstag der Anmeldung :
**24.02.82 Patentblatt 82/08**

(45) Bekanntmachung des Hinweises auf die Patenterteilung : **07.09.83 Patentblatt 83/36**

(45) Bekanntmachung des Hinweises auf die Entscheidung über den Einspruch : **28.06.89 Patentblatt 89/26**

(84) Benannte Vertragsstaaten :
**CH DE FR GB IT LI SE**

(56) Entgegenhaltungen :
**FR-A- 1 270 821**
**GB-A-   465 008**
**US-A- 2 510 528**
**US-A- 2 766 664**
**US-A- 2 881 665**
**US-A- 2 932 239**
**US-A- 2 949 062**
**US-A- 2 978 964**

(73) Patentinhaber : **Werkzeugmaschinenfabrik Oerlikon-Bührle AG**
**Birchstrasse 155**
**CH-8050 Zürich (CH)**

(72) Erfinder : **Kotthaus, Erich**
**Schmittenackerstrasse 18**
**CH-8304 Wallisellen (CH)**

EP 0 046 311 B2

## EP 0 046 311 B2

**Beschreibung**

Die Erfindung betrifft ein Verfahren zum Erzeugen von Zahnrädern mit längsballigen Zähnen durch Schneiden von Zahnflanken nach einem kontinuierlichen Verfahren mit einem um eine Messerkopfachse rotierenden und/oder mit Aussen- und Innenschneiden aufweisenden Messern versehenen Messerkopf, wobei die Erzeugung von beiden Flanken einer Zahnlücke in einem einzigen Arbeitsgang erfolgt, sowie einen Messerkopf zur Durchführung des Verfahrens.

Aus der Patentschrift CH-A-271 703 ist ein Verfahren und eine Maschine zum Schneiden von Kegelzahnrädern mit gekrümmten Zähnen nach dem kontinuierlichen Abwälzverfahren bekannt, bei dem aussenschneidende Messer unter sich und innenschneidende Messer unter sich den gleichen radialen Abstand von einer Drehachse des Werkzeuges aufweisen und alle Messer gleiche gegenseitige Winkelabstände besitzen. Davon abgeleitet wird in der Praxis die Balligkeit der Zähne erreicht, indem die Innenflanken der Zähne durch Messer erzeugt werden, die einen grösseren radialen Abstand von der Drehachse aufweisen als die Messer, mit denen die Aussenflanken erzeugt werden. Dadurch wird der Krümmungsradius der konkaven Zahnflanken grösser als derjenige der konvexen Zahnflanken. Gleichzeitig mit der radialen Verstellung muss auch die Winkellage der Aussen- und der Innenschneiden angepasst, d. h. aus der gleichmässigen Winkelaufteilung versetzt angeordnet werden. Bekanntlich führen diese Massnahmen aber nur in einem Sonderfall zu brauchbaren Kegelradsätzen, nämlich, wenn die Normale zu einer Zahnlängskurve an einem Berechnungspunkt senkrecht zu der Verbindungslinie zwischen Planrad- und Messerkopfzentrum steht. Dazu siehe auch die Patentschrift FR-A-1 270 821 bzw. deren Prioritätsschrift CH-A-402 565.

Bei Abweichungen von dieser geometrischen Einschränkung ist die Erzeugung des längsballigen Zahntragens durch unterschiedliche Messerradien der Aussen- und Innenmesser in einem Messerkopf nicht brauchbar, wenn Kegelräder eines Kegelrad- oder Hypoidgetriebes in einem einzigen Arbeitsgang aus dem Vollen fertigverzahnt werden sollen, weil de Spiralwinkel der konkaven Zahnflanke grösser als derjenige der konvexen Zahnflanke wird, was zur Verschiebung der Tragbildlage an das Zahnende bis hin zu unpassenden Rädern eines Radpaares führt. Durch Neigung der Messerkopfachse in einer Ebene, die senkrecht zur Planradebene und zum Krümmungsradius, der zu einem Berechnungspunkt an der Zahnflanke führt, steht, können die Spiralwinkel wieder einander angeglichen werden, wobei nun die Zähne eine über die Zahnbreite abnehmende Höhe aufweisen. Dies führt aber zu weiteren bekannten Verzahnungsfehlern, z. B. sogenanntes «Schrägzahntragen» und starke Zahnverwindung.

Zur Umgehung dieser Verzahnungsfehler werden brauchbare Zahnradpaare hergestellt, indem das Tellerrad in einem Arbeitsgang und die Aussenflanken bzw. die Innenflanken des Ritzels in zwei getrennten Arbeitsgängen geschnitten werden.

Diese von kontinuierlichen Verfahren her bekannten schwierigen Voraussetzungen konnten durch ein Verfahren gemäss der Patentschrift CH-A-417 284 überwunden werden. Dabei wird in einem einzigen Arbeitsgang pro Rad eines Kegel- bzw. Hypoidzahnradpaares mit zykloidenförmig längsgekrümmten Zähnen die Balligkeit durch Neigen mindestens der einen Messerkopfachse in einer Radialebene durch den Berechnungspunkt der Zahnflanke erzielt. Die Radien der Innen- und Aussenmesser auf dem Messerkopf sind gleich gross und die danach geschnittenen Zähne sind annähernd über die ganze Zahnbreite gleich hoch.

Durch Neigung des Messerkopfes in der Radialebene wird allerdings an den Zahnenden etwas tiefer als in der Mitte, also eine erweiterte Zahnlücke geschnitten. Die nun unterschiedlichen Längskrümmungen, beispielsweise gegenüber einem nicht korrigierten Gegenrad, ergeben bei Anlage der Zähne ein begrenztes, d. h. balliges Zahntragen. Die Tragbilder werden um so kürzer, je grösser der Messerkopfneigungswinkel gewählt wird. Die Tragbildlage wird bestimmt durch die Neigungsrichtung, d. h. ein Berechnungspunkt auf einer Zahnlängslinie, durch den die Radialebene gelegt wird, bildet den Kern der Tragbildlage. Wenn sich die Tragbildlage im Betrieb unter Last nach aussen verlagert, was in der Regel zutrifft, wird der Berechnungspunkt für den Leerlauf und damit auch die Richtung der Radialebene etwas nach der Zahninnenseite verlegt, d. h. die Berechnung basiert auf einem leicht veränderten geometrischen Dreieck.

Aus der Praxis sind in Verbindung mit diesem Verfahren auch Messerköpfe bekanntgeworden, bei denen Messer mit unterschiedlichen Radien für Aussen- und Innenschneiden sowie mit ungleichmässiger Aufteilung angeordnet werden. Allerdings werden die Radien und die Aufteilung der Messer an den beiden Messerköpfen zum Schneiden der beiden Räder eines Kegelradpaares so ausgelegt, dass die durch unterschiedliche Messereinstellungen erzielte resultierende Balligkeit gleich Null ist, d. h. die positive Balligkeit am einen Rad wird durch die negative Balligkeit am Gegenrad vollständig kompensiert. Die effektive Balligkeit wird also weiterhin ausschliesslich durch Neigung der Messerkopfachse in einer Radialebene erreicht, und zwar eine positive Balligkeit, wie in der Praxis üblich, durch Neigung der Messerkopfachse in der Radialebene in Richtung weg von den zu schneidenden Zähnen und eine negative Balligkeit, falls erwünscht, durch Neigung der Messerkopfachse in der Radialebene in Richtung zu den Zähnen hin. Dieses Verfahren ist nicht den geometrischen Einschränkungen des Verfahrens nach

2

der CH-A-271 703 unterworfen, weil die Balligkeit alleine durch Neigung der Messerkopfachse erzeugt wird. Die Schneidleistung jedoch wird beschränkt durch die grösstmögliche Anzahl der Messergruppen bei gegebenen Messerradien. Weil sich die Versetzungswinkel, d. h. die totale Versetzung der Innen- und Aussenschneiden aus der gleichmässigen Winkelaufteilung, bei den zwei Messerköpfen für Rad und Gegenrad auf Null kompensieren (keine Balligkeit durch verschiedene Messerradien), gestattet die kleinstmögliche Winkelaufteilung bezogen auf eine Messergruppe die Unterbringung von drei Messern. Daher wird in der Praxis generell zusätzlich zu Aussen- und Innenschneider auch ein Vorschneider pro Messergruppe verwendet, um den zwangsweise gegebenen Platz bestmöglich zu nutzen. Die Verwendung des Vorschneiders ergibt sich weiter auch aus den an sonst ungleichmässigen Schneidenbelastungen von Aussen- und Innenschneiden, um gleichmässigere Messerstandzeiten zu erreichen.

Wie bei allen Ballenerzeugungsverfahren ist auch dieses Verfahren mit gewissen Fehlern behaftet. Durch die Messerkopfschiefstellung und durch die Grösse des Verschraubungswinkels, wie er sich bei kontinuierlichen Schneidverfahren ergibt, wird eine Zahnverwindung geschnitten. Der Verwindungswinkel wird um so grösser, je grösser der Verschraubungswinkel wird, wenn sonst alle Grössen gleich bleiben. Der Verschraubungswinkel wird um so grösser, je mehr Messergruppen auf einem Messerkopf bei gleichbleibendem Messerradius untergebracht sind. Um eine Erhöhung der Schneidleistung zu erreichen, müssen mehr Fertigschneider (Messergruppen) bei gleichem Messerradius am Messerkopf angeordnet werden, wodurch mehr Zähne pro Zeiteinheit bearbeitet werden. Hier stösst aber dieses Schneidverfahren an Grenzen, indem die sich ergebenden Verzahnungsfehler bei Erhöhung des Verschraubungswinkels nicht mehr durch bekannte Korrekturmöglichkeiten, z. B. durch dei Hohlkegelmethode kompensiert werden können.

Der Erfindung liegt die Aufgabe zugrunde, ein Verfahren und einen Messerkopf zum Erzeugen von Zahnrädern mit längsballigen Zähnen zu schaffen, die eine Erhöhung der Anzahl Messergruppen und dadurch eine wesentliche Steigerung der Schneidleistung ermöglichen, ohne das Laufverhalten der Zahnräder nachteilig zu beeinflussen.

Diese Aufgabe wird bei dem eingangsgenannten Verfahren durch folgende Verfahrensschritte gelöst :
— Neigen der Messerkopfachse aus einer Senkrechten zu einer an einen Berechnungspunkt einer Zahnlängslinie einer Teilfläche eines Zahnrades angelegten Tangentialebene in einer bzw. in eine Ebene, welche senkrecht bzw. annähernd senkrecht zur Tangentialebene und mindestens annähernd parallel zu einem Krümmungsradius der Zahnlängslinie im Berechnungspunkt verläuft,
— Einstellen der Messer am Messerkopf derart, dass
Teilpunkte der Aussenschneiden auf einem ersten Kreis mit einem ersten Radius und Teilpunkte der Innenschneiden auf einem zweiten Kreis mit einem zweiten Radius angeordnet sind,
die Aussenschneiden je um einen Winkel $\varepsilon_3$ und die Innenschneiden je um einen Winkel $\varepsilon_4$ aus der gleichmässigen Winkelaufteilung $\delta$ versetzt angeordnet sind und
die Aussenschneiden bzw. die Innenschneiden im Einsatz beim Durchdringen des Berechnungspunktes je einen Winkel $\alpha$ bzw. $\alpha'$ mit einer Senkrechten zur Tangentialebene bilden,
wobei die wirksame Gesamtballigkeit aus einem Anteil der Neigung der Messerkopfachse in der bzw. in die Ebene und einem Anteil der unterschiedlichen Radien der Aussen- und Innenschneiden gebildet wird.

Der Messerkopf zur Durchführung des Verfahrens nach Anspruch 1, in einer Vergleichsstellung mit einem Messerkopf zur Herstellung eines Gegenrades, in der ein Schnittpunkt der Messerkopfachse und Teilpunkte je einer Aussenschneide und einer Innenschneide in einer gemeinsamen Teilebene liegen und Projektionen der Innenschneiden und der Aussenschneiden auf einer Radialebene, welche senkrecht steht zu der gemeinsamen Teilebene, mindestens annähernd parallel zueinander verlaufen, ist dadurch gekennzeichnet, dass zwischen Innenschneide und Aussenschneide ein Radiusunterschied vorhanden ist und die Messerkopfachsen einen Winkel $\eta$ einschliessen, der kleiner ist als 180°.

Die durch die Erfindung erreichten Vorteile sind im wesentlichen darin zu sehen, daß die Zahnverwindung durch dieses Verfahren beeinflußbar gemacht wird. Insbesondere ist es demnach möglich, diese zu vermeiden. Da diese Zahnverwindung so vermeidbar ist, hat man mit diesem erfindungsgemäßen Verfahren die Möglichkeit, Messerköpfe zu verwenden, die bei einem gegebenen Messerkopfradius eine relativ große Anzahl Messergruppen aufweisen. Dies ergibt eine entsprechend gesteigerte Schneidleistung.

Ein weiterer Vorteil der erfindungsgemäßen Stellung von Messerkopf und Werkstück zueinander besteht darin, daß bei Kegelrädern, an deren Innendurchmesser sich ein Schaft anschließt, die Gefahr des Anschneidens des Schaftes verringert wird. Ferner vermindert sich durch dieses Verfahren der Unterschnitt bei Ritzeln mit kleinen Zähnezahlen, d. h. die in diesen Fällen am Zahnfuß auftretende Zahnquerschnittsverengung findet nicht oder höchstens in geringem Maße statt. Insbesondere bei der Verzahnung von Ritzeln von Bedeutung ist der Umstand, daß die Innenschneiden und die Außenschneiden untereinander gleichmäßiger belastet werden, da die Kopfbahnen der Messer näher beieinander liegen. Dies ergibt gleichmäßigere Abnützung, was wiederum bedeutet, daß die stärker belasteten Schneiden weniger häufig nachgeschliffen werden müssen.

Das erfindungsgemäße Verfahren erlaubt es, insbesondere auch Messerköpfe zu verwenden, deren Messergruppen nur ein einziges Messer aufweisen. Dieses Messer trägt gleichzeitig eine Innenschneide und eine Außenschneide. Damit werden erhebliche Steigerungen der Schneidleistung ermöglicht.

Mit Hilfe des erfindungsgemäßen Verfahrens bzw. dem erfindungsgemäßen Messerkopf ist es erstmals möglich, nach einem kontinuierlichen Schneidverfahren Stirn- oder Klauenkupplungen herzustellen, deren Verhältnis von Außenradius zu Zahnkranzbreite den für Zahnräder üblichen Wert von 3 bis 3,5 beträgt.

Ein Ausführungsbeispiel der Erfindung wird nachstehend anhand der Zeichnungen erläutert. Es zeigt

Fig. 1 schematisch eine Frontalansicht auf den oberen Teil einer Verzahnungsmaschine ;

Fig. 2 den schematischen Grundriß zu Fig. 1, teilweise im Schnitt ;

Fig. 3 eine schematische Darstellung verschiedener, beim Schneiden wichtiger geometrischer Größen ;

Fig. 4 schematisch die geometrischen Zusammenhänge am Messerkopf in Ansicht und Grundriß ;

Fig. 5 eine schematische Darstellung der Messerbahnen in der Teilfläche des herzustellenden Zahnrades ;

Fig. 6 eine vereinfachte Darstellung der Anordnung der Messer an einem Messerkopf ;

Fig. 7 und 8 schematisch je zwei Messerköpfe im Schnitt in ihrer gegenseitigen Stellung beim Schneiden entsprechender Zahnflanken ;

Fig. 9 eine weitere schematische Darstellung der geometrischen Verhältnisse beim Schneiden ;

Fig. 10 einen Grundriß analog Fig. 2 für andere geometrische Verhältnisse beim Schneiden ;

Fig. 11 eine perspektivische Darstellung eines Zahnes ;

Fig. 12 einen Schnitt durch ein Planrad ;

Fig. 13 einen weiteren Schnitt durch ein Planrad ;

Fig. 14 eine schematische Darstellung der Schneidgeometrie ;

Fig. 15 eine weitere perspektivische Darstellung eines Zahnes ;

Fig. 16 einen Schnitt durch ein Stirnrad ;

Fig. 17 einen Schnitt durch ein Kegelrad ;

Fig. 18 einen Schnitt durch ein weiteres Kegelrad ;

Fig. 19 einen Schnitt durch ein Tellerrad bzw. durch einen Teil einer Klauenkupplung.

Fig. 20 eine perspektivische Darstellung eines Kegelrades.

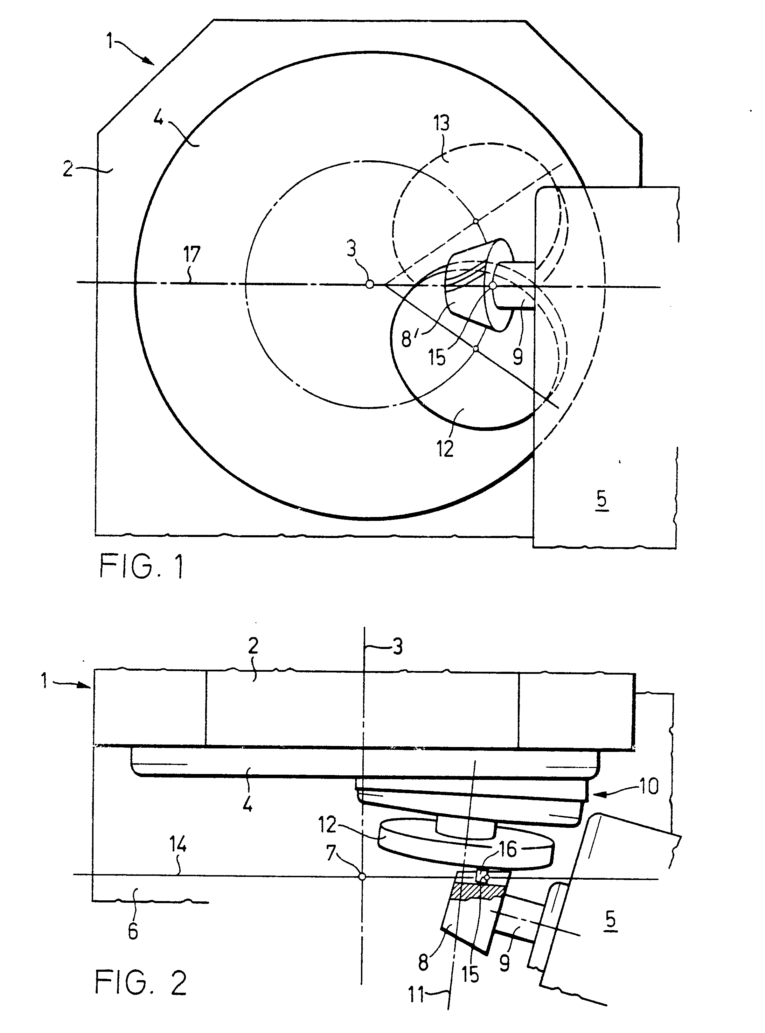

Fig. 1 und 2 zeigen einen Teil einer an sich bekannten Verzahnungsmaschine 1, mit einem Wälzstock 2 und einer darin um eine Achse 3 drehbar gelagerten Wälztrommel 4. In einem Spindelstock 5, der auf einem Maschinenbett 6 in an sich bekannter Weise um ein Zentrum 7 schwenkbar angeordnet ist, ist beispielsweise ein unverzahnter Kegelradkörper 8′ für ein Kegelrad 8 auf einer Spindel 9 befestigt. Selbstverständlich können auf dieser Verzahnungsmaschine auch andere Zahnradkörper befestigt werden, beispielsweise Radkörper für andere Kegelräder, Stirnräder, Tellerräder usw. In Fig. 2 sind Teile einer Schwenkvorrichtung 10 sichtbar, die es erlaubt, die Messerkopfspindelachse bzw. eine Messerkopfachse 11 gegenüber der Wälztrommel 4 zu neigen. Wie an sich bereits bekannt, ist ein Messerkopf 12 auf der Wälztrommel 4, wie auch der Kegelradkörper 8′ auf dem Spindelstock 5 drehbar gelagert. Ein weiterer Messerkopf 13 ist in Fig. 1 gestrichelt angedeutet. In dieser Stellung muß sich ein Messerkopf befinden, um ein hier nicht dargestelltes Gegenrad zum Kegelrad 8 herstellen zu können. In Fig. 2 ist ferner eine an die Teilfläche des Kegelrades 8 angelegte Tangentialebene 14 ersichtlich. Darin liegt ein Berechnungspunkt 15 für die Zahnflanken des Kegelrades 8. Der Berechnungspunkt 15 ist auch in Fig. 1 zu erkennen. In Fig. 2 ist weiter noch ein Messer 16 sichtbar, von denen in der Regel mehrere über den Umfang des Messerkopfes 12 verteilt angeordnet sind. Diese sind aber zwecks Wahrung der Übersichtlichkeit der Darstellung nicht eingezeichnet. In Fig. 1 ist durch den Berechnungspunkt 15 auch eine Achse 17, welche die Achse 3 schneidet, eingezeichnet. Zu dieser Achse 17 sind die Messerköpfe 12, 13 zum Schneiden eines Zahnrades bzw. dessen Gegenrades symmetrisch angeordnet, allerdings nicht gleichzeitig, sondern nacheinander beim Schneiden des betreffenden Rades.

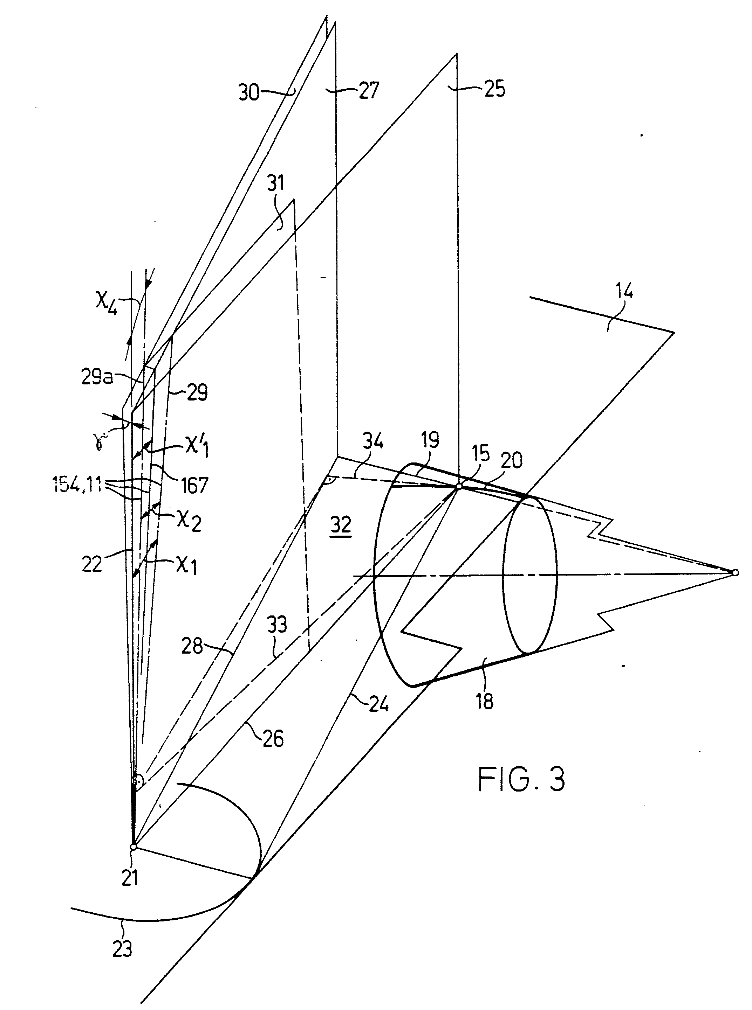

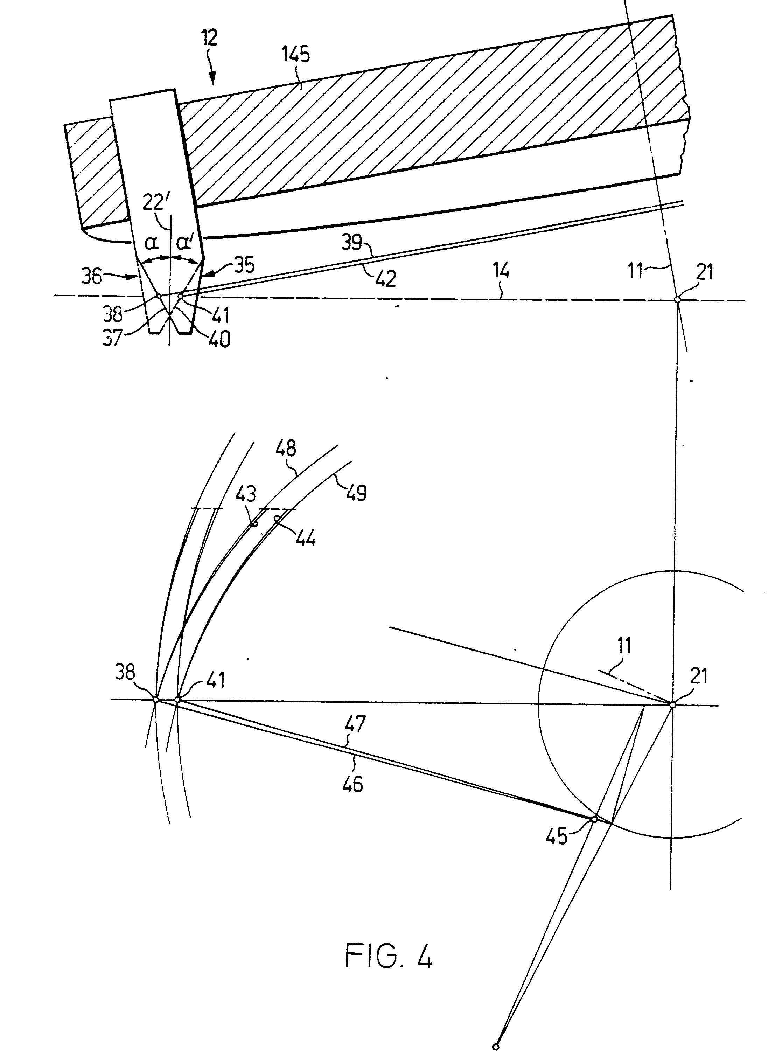

In Fig. 3 ist von einem herzustellenden Zahnrad, beispielsweise einem Kegelrad 8, wie aus den Fig. 1 und 2 bekannt, nur eine Teilfläche 18 ersichtlich. Die Tangentialebene 14 berührt die Teilfläche 18 in einer Mantellinie 19. Auf dieser liegt auch der Berechnungspunkt 15 für eine Zahnlängslinie 20 einer nicht näher dargestellten Zahnflanke. Mit 21 ist ein Durchstoßpunkt der Messerkopfachse 11 durch die Tangentialebene 14 bezeichnet. Auf dem Durchstoßpunkt 21 ist ferner eine Senkrechte 22 auf die Tangentialebene 14 errichtet. Als Ellipse 23 ist der kleine Rollkreis teilweise in der Tangentialebene 14 ersichtlich. Auf der Tangente an den Rollkreis bzw. die Ellipse 23 durch den Berechnungspunkt 15 liegt auch ein Krümmungsradius 24 der Zahnlängslinie 20 an dieser Stelle (siehe auch Ausführungen zu Fig. 4). Um die Lage der Messerkopfachse 11 im Raum besser erfassen zu können, seien noch weitere Ebenen eingeführt. Eine Radialebene 25, die gebildet wird durch die Senkrechte 22 und eine Verbindungslinie 26 zwischen dem Durchstoßpunkt 21 und dem Berechnungspunkt 15. Die Radialebene 25 enthält die Messerradien beim Durchgang der Schneiden durch den Berechnungspunkt bei senkrecht auf der Tangentialebene 14 stehender Messerkopfachse und schneidet die Tangentialebene 14 in der Verbindungslinie 26. Eine Vertikalebene 27 wird gebildet durch die Senkrechte 22 und eine Parallele 28 zum Krümmungsradius 24 in der Tangentialebene 14, aber durch den Durchstoßpunkt 21. Eine um einen Winkel $\gamma$ gegen die Vertikalebene 27 geneigte Schrägebene 30 hat mit der Vertikalebene 27 die Parallele 28 gemeinsam.

Eine weitere Ebene 31 hat mit der Radialebene 25 die Verbindungslinie 26 gemeinsam, ist gegen diese geneigt und schneidet sowohl die Vertikalebene 27 wie auch die Schrägebene 30. Schnittlinien 29 und 29a der Ebene 31 mit der Vertikalebene 27 sowie der Schrägebene 30 definieren mögliche Stellungen

4

der Messerkopfachse 11. Bei der Bestimmung der Lage der Messerkopfachse 11 wird jeweils nur ein, aus der der Teilfläche 18 abgewandten Seite der Tangentialebene 14 herausragender Abschnitt 154 betrachtet. Befindet sich die Messerkopfachse 11 beispielsweise in einer Stellung, in der sie mit der Schnittlinie 29a identisch ist, so bewegen sich die hier nicht dargestellten Teilpunkte der Schneiden der Messer in einer Teilpunktebene 32, die gebildet wird durch einen Teilpunktradius 33, der zur Messerkopfachse 11 senkrecht steht, sowie durch eine Senkrechte 34 auf die Schrägebene 30 durch den Berechnungspunkt 15.

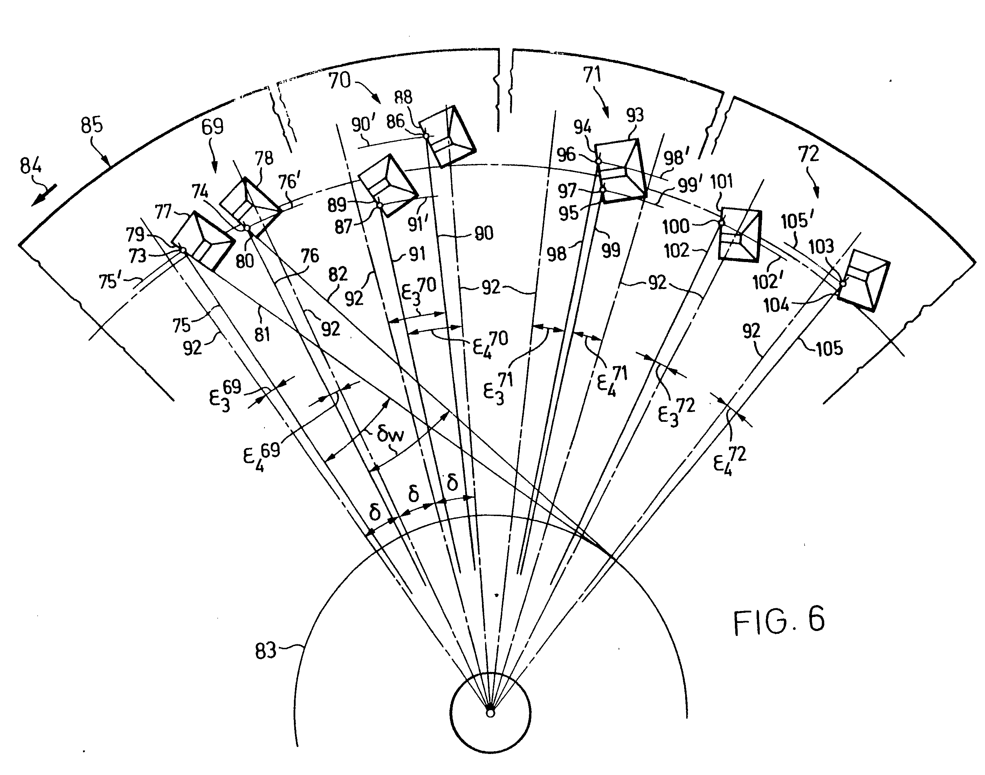

In Fig. 4 ist ein Teil des Messerkopfes 12, der um die Messerkopfachse 11 drehbar ist, in Ansicht, im Schnitt und gegenüber Fig. 1 vergrößert dargestellt. Im Grundriß ist davon nur die Messerkopfachse 11 ersichtlich. In einem Messerkopfgrundkörper 145 ist als Messer pro Messergruppe je ein Außenschneider 35 sowie ein gestrichelt dargestellter Innenschneider 36 eingesetzt. Da eine Messergruppe meistens aus mehreren Messern 35, 36 besteht, sind in dieser Figur die Außen- und die Innenschneiden tragenden Messer 35 und 36 in dieselbe Ebene, d. h. die Zeichnungsebene verschoben dargestellt. In Wirklichkeit liegt also der Innenschneider 36 in einer Ebene, die in einem Abstand und geneigt zur Zeichnungsebene verläuft, beispielsweise entsprechend dem Abstand von Tangenten 81 und 82 in der später erläuterten Fig. 6. Eine Außenschneide 37 des Außenschneiders 35 schneidet die nicht dargestellte Teilfläche des herzustellenden Zahnrades oder die bereits bekannte Tangentialebene 14 in einem Teilpunkt 38, der zugleich im Grundriß mit dem Berechnungspunkt 38 in dieser Lage identisch ist. Die Teilpunkte 38 aller Außenschneiden 37 liegen auf einer Außenteilpunktebene 39. Die Außenschneide 37 schließt beim Durchgang durch den Berechnungspunkt 38 mit einer Senkrechten 22' zur Tangentialebene 14 einen Winkel $\alpha$ ein. Die Innenschneide 40 schließt in gleicher Weise mit der Senkrechten 22' einen Winkel $\alpha'$ ein. Die Winkel $\alpha$ und $\alpha'$ entsprechen dabei mindestens angenähert einem mittleren Normaleingriffswinkel $\alpha_n$.

Eine Innenschneide 40 des Innenschneiders 36 schneidet die Tangentialebene 14 in einem Teilpunkt 41, der zugleich im Grundriß mit dem Berechnungspunkt 41 identisch ist. Eine Innenteilpunktebene 42 enthält die Teilpunkte 41 aller Innenschneiden 40. Die Teilpunkte oder Berechnungspunkte 38 und 41 gehören je zu Zahnlängslinien 43 und 44, die je anstelle einer Innen- bzw. Außenflanke eines Zahnes dargestellt sind. In diesen Darstellungen ist jeweils diejenige Schneide als Außenschneide bezeichnet, die die konkave Zahnflanke schneidet. Entsprechend wird als Innenschneide diejenige Schneide bezeichnet, die die konvexe Flanke eines längsgekrümmten Zahnes schneidet.

Der im Grundriß der Fig. 4 ersichtliche Berechnungspunkt 38 gehört zu einer Innenflanke eines Zahnes, von dem die Zahnlängslinie 43 dargestellt ist. Entsprechend gehört der Berechnungspunkt 41 zu einer Außenflanke bzw. dessen Zahnlängslinie 44. Mit 45 ist ein Krümmungsmittelpunkt der beiden Zahnlängslinien 43 und 44 in den Berechnungspunkten 38 und 41 bezeichnet. Von ihm aus erstrecken sich Krümmungsradien 46 und 47 zu den Berechnungspunkten 38 und 41. Ohne Neigung der Messerkopfachse 11 ergäben sich so Zahnlängslinien 48 und 49, die aber nicht die gewünschten Eigenschaften aufweisen. In Wirklichkeit ist es beim Eingriff von zwei Zähnen je eines Rades eines Zahnradpaares ungefähr so, daß der Berechnungspunkt 38 der Gegenflanke auf den Berechnungspunkt 41 zu liegen kommt. Dabei weist die Außenflanke eines Zahnes den kleineren Krümmungsradius 47, die Innenflanke den größeren Krümmungsradius 46 auf. Durch die so erzeugte Balligkeit kann das gewünschte Tragbild erzeugt werden.

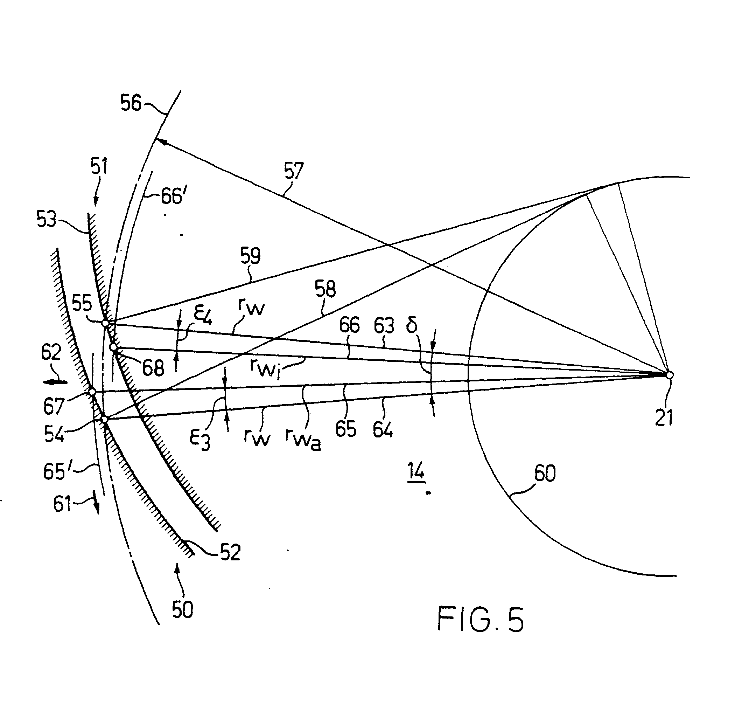

In Fig. 5 sind je eine Innenflanke 50 und eine Außenflanke 51 von zwei benachbarten Zähnen eines Zahnrades in der Teilfläche als Zahnlängslinien 52 und 53 dargestellt. Zum Schneiden dieser Zahnflanken 50 und 51 ist ein Messerkopf vorgesehen, dessen Messerkopfachse 11 die Tangentialebene 14, welche identisch ist mit der Zeichenebene, im Durchstoßpunkt 21 schneidet.

Werden die Zahnflanken beispielsweise in an sich bekannter Weise nicht ballig geschnitten, so sind Berechnungspunkte 54, 55 von Bedeutung. Da die Berechnungspunkte 54, 55 auf dem Umfang eines Kreises 56 mit einem Radius 57 liegen, haben die Innenflanke 50 und die Außenflanke 51 im Bereiche der Berechnungsflanke 54, 55 den gleichen Krümmungsradius 58 bzw. 59. Der Krümmungsradius 58 bzw. 59 entspricht näherungsweise der Länge der Tangente an einen Rollkreis 60 durch die betreffenden Berechnungspunkte 54 und 55. Pfeil 61 gibt den Drehsinn des Messerkopfes, Pfeil 62 die ungefähre Bewegungsrichtung der Zahnflanken 50 und 51 an. Dabei ist nicht zu vergessen, daß die Zahnlängslinien 52 und 53 Teilstücke einer Zykloiden bilden, die hier näherungsweise in der Umgebung der Berechnungspunkte 54 und 55 als Kreisbogenstücke dargestellt sind. Es entspricht ferner ein Winkel $\delta$ zwischen Messerradien 63 und 64 für die Berechnungspunkte 54 und 55 der gleichmäßigen Aufteilung der Innen- bzw. Außenschneiden tragenden Messer im Messerkopf. Mit anderen Worten stellt der Berechnungspunkt 54 gleichzeitig auch den Teilpunkt auf einer Außenschneide, der Berechnungspunkt 55 den Teilpunkt auf einer Innenschneide dar.

Sollen nun erfindungsgemäß die Zahnflanken 50 und 51 ballig geschnitten werden, so wird im Messerkopf 12 die Außenschneide 37 auf einen Kreis 65' mit einem größeren Radius 65, die Innenschneide 40 auf einen Kreis 66' mit einem kleineren Radius 66 gebracht. Um aber nach wie vor im Prinzip die selben Zahnflanken 50 und 51 nun ballig zu schneiden, müssen die Innen- rsp. die Außenschneiden 40 resp. 37 auf denselben Zykloiden bleiben, welche näherungsweise durch die Zahnlängslinien 52 und 53 dargestellt sind. Das bedeutet, daß nun die Außenschneide 40 durch einen neuen Berechnungs- oder Teilpunkt 67, die Innenschneide durch einen Berechnungs- oder Teilpunkt 68 dargestellt wird. Die Außenschneide ist demnach um einen Winkel $\varepsilon_3$ zurückgeschoben, die Innenschneide um einen Winkel $\varepsilon_4$ vorverschoben worden.

In Fig. 6 ist ein Messerkopf 85 dargestellt, der mehrere verschiedenartige Messergruppen 69, 70, 71 und 72 aufweist. Anschließend werden die einzelnen Messergruppen 69, 70, 71 und 72 mit ihren spezifischen Merkmalen behandelt werden. Es ist aber für den Fachmann klar, daß ein praktisch brauchbarer Messerkopf jeweils nur Messergruppen der einen Art, die unter sich gleich sind, aufweisen kann. Diese Anordnung verschiedener Messergruppen auf einem Messerkopf dient ausschließlich der Illustration.

Teilpunkte 73 bzw. 74 von Außen- bzw. Innenschneider 77 bzw. 78 der Messergruppe 69 sind auf Kreisen 75' bzw. 76' mit unterschiedlichen Radien 75 und 76 angeordnet. Eine Außen- bzw. Innenschneide 79 bzw. 80 liegt je in einer Ebene, deren Schnitt mit der Zeichnungsebene je eine Tangente 81 bzw. 82 an einen Rollkreis 83 bildet. Die Radien 75 und 76 schließen mit der zugeordneten Tangente 81 bzw. 82 den Verschraubungswinkel $\delta_w$ ein. Ein Pfeil 84 zeigt die Bewegungsrichtung des Messerkopfes 85 an. Dabei ist zu beachten, daß in der Messergruppe 69, die Außen- und Innenschneiden 79 bzw. 80 je um einen Winkel $\delta_3^{69}$ bzw. $\varepsilon_4^{69}$ von der gleichmäßigen Messeraufteilung gemäß Linien 92, die je um den Winkel $\delta$ voneinander verschwenkt sind, verschoben sind. Der Innenschneider 78 folgt in Bewegungsrichtung gesehen nach dem Außenschneider 77.

In der Messergruppe 70 sind Teilpunkte 86 bzw. 87 der Außen- bzw. Innenschneiden 88 bzw. 89 auf Kreisen 90' bzw. 91' mit ebenfalls unterschiedlichen Radien 90 und 91 angeordnet. Da der Unterschied der Radien 90 und 91 größer ist als der Unterschied zwischen den Radien 75 und 76, wird die Messergruppe 70 eine ausgeprägtere Balligkeit erzeugen als die Messergruppe 69. Es ist zu beachten, daß die Radien 90 und 91 auch unterschiedliche Winkel $\varepsilon_3^{70}$ und $\varepsilon_4^{70}$ zur Folge haben. So kommt nun die Außenschneide 88 in Bewegungsrichtung gesehen hinter die Innenschneide 89 zu liegen.

Die Messergruppe 71 besteht aus einem einzigen Messer 93, welches eine Außen- und eine Innenschneide 94 und 95 trägt. Teilpunkte 96 bzw. 97 liegen auch hier auf verschiedenen Kreisen 98' bzw. 99' mit Radien 98 bzw. 99. Die Teilpunkte 96 und 97 sind auch hier um die Winkel $\varepsilon_3^{71}$ und $\varepsilon_4^{71}$ von den Linien 92 weggeschwenkt.

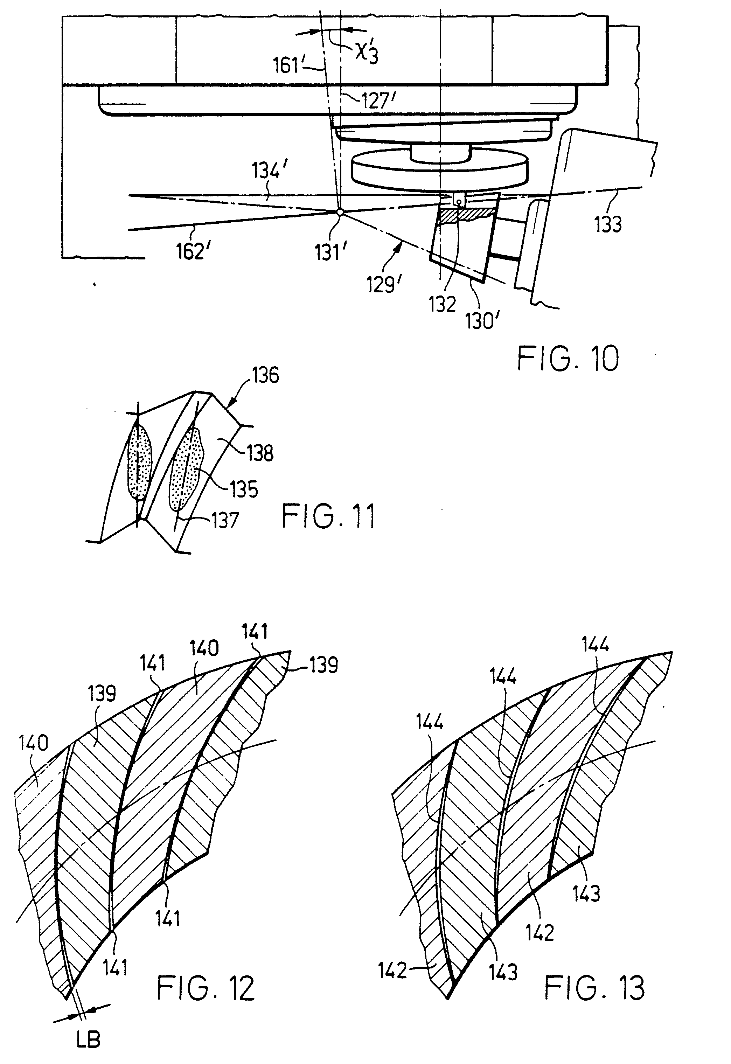

Man kann die Messergruppen 69, 70 und 71 als Messergruppen bezeichnen, die eine positive Balligkeit erzeugen, d. h. eine Balligkeit, bei der die Außenflanken der Zähne stärker gekrümmt sind als die Innenflanken (siehe Fig. 12). Bei diesen Messergruppen 69, 70 und 71 ist in Fig. 6 der Winkel $\varepsilon_3$ jeweils in der Richtung abgetragen, bei der die Teilpunkte 73, 86 bzw. 96 der Außenschneiden 79, 88 bzw. 94 auf größere Radien 75, 90 bzw. 98 gebracht werden. Dementsprechend werden die Teilpunkte 74, 87 bzw. 97 der Innenschneiden 80, 89 bzw. 95 durch das Abtragen der Winkel $\varepsilon_4$ in dem Sinne verschoben, daß sie auf kleinere Radien 76, 91 bzw. 99 gebracht werden. Bei diesen drei Messergruppen 69, 70 und 71 liegen also die Außenschneiden auf größeren Radien als die Innenschneiden.

Demgegenüber liegt bei der Messergruppe 72 ein Teilpunkt 100 einer Außenschneide 101 auf einem Kreis 102' mit kleinerem Radius 102 als ein Radius 105 eines Kreises 105', auf dem ein Teilpunkt 103 einer Innenschneide 104 liegt. Dies ergibt entsprechend eine negative Balligkeit (siehe Fig. 13). Die Innenflanke eines Zahnes ist somi stärker gekrümmt als dessen Außenflanke. Dies wird erreicht, indem man die Winkel $\varepsilon_3^{72}$ und $\varepsilon_4^{72}$ in der entgegengesetzten Richtung abträgt als dies bei den Messergruppen 69, 70 und 71 der Fall ist.

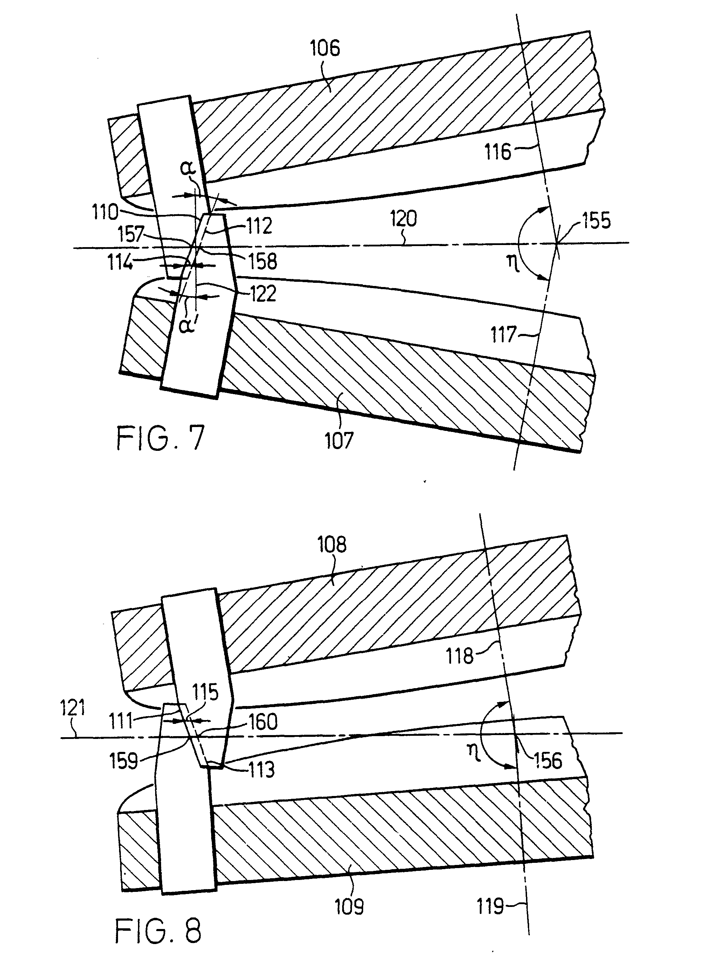

In Fig. 7 und 8 sind je zwei Messerköpfe 106 und 107 bzw. 108 und 109 so einander gegenübergestellt, daß zwischen je einer Außenschneide 110 bzw. 111 und einer Innenschneide 112 bzw. 113 ein Radienunterschied 114 bzw. 115 zwischen den Messerradien der Innenschneiden 112 bzw. 113 und den Außenschneiden 110 bzw. 111 erzielt wird. Eine solche gegenseitige Stellung wird beispielsweise erreicht, wenn man gemäß Fig. 1 den Messerkopf 13 um 180° um die Achse 17 schwenkt. Dabei schneiden sich die Messerkopfachsen 116 und 117 bzw. 118 und 119 in Schnittpunkten 155 bzw. 156 in Teilebenen 120 bzw. 121 und Teilpunkte 157 und 158 bzw. 159 und 160 der Außen- und Innenschneiden 110, 112 bzw. 111, 113 dieser Messerkopfpaare 106 und 107 bzw. 108 und 109 liegen ebenefalls auf der gemeinsamen Teilebene 120 bzw. 121. Die beiden Messerkopfachsen 116 und 117 bzw. 118 und 119 schließen in deisen Beispielen einen Winkel $\eta$ ein, der kleiner ist als 180°. Da die Messerkopfachsen 116, 117, 118 und 119 in den Fig. 7 und 8 auch gegen die Zeichnungsebene geneigt sind, sehen wir die Winkel $\eta$ nicht in ihrer wirklichen Größe.

Aus den Fig. 7 und 8 ist zudem ersichtlich, daß die Außen- und die Innenschneiden 110, 111, 112 und 113 so geneigt sind, daß sie beim Durchgang durch die Radialebene 25 (siehe Fig. 3), welche hier der Zeichnungsebene entspricht, mit einer Senkrechten 122 zur Teilebene 120 bzw. 121, (welche in Fig. 3 der Tangentialebene 14 entspricht), einen Normaleingriffswinkel $\alpha$ bzw. $\alpha'$ einschließen, der dem Normaleingriffswinkel der herzustellenden Verzahnung entspricht.

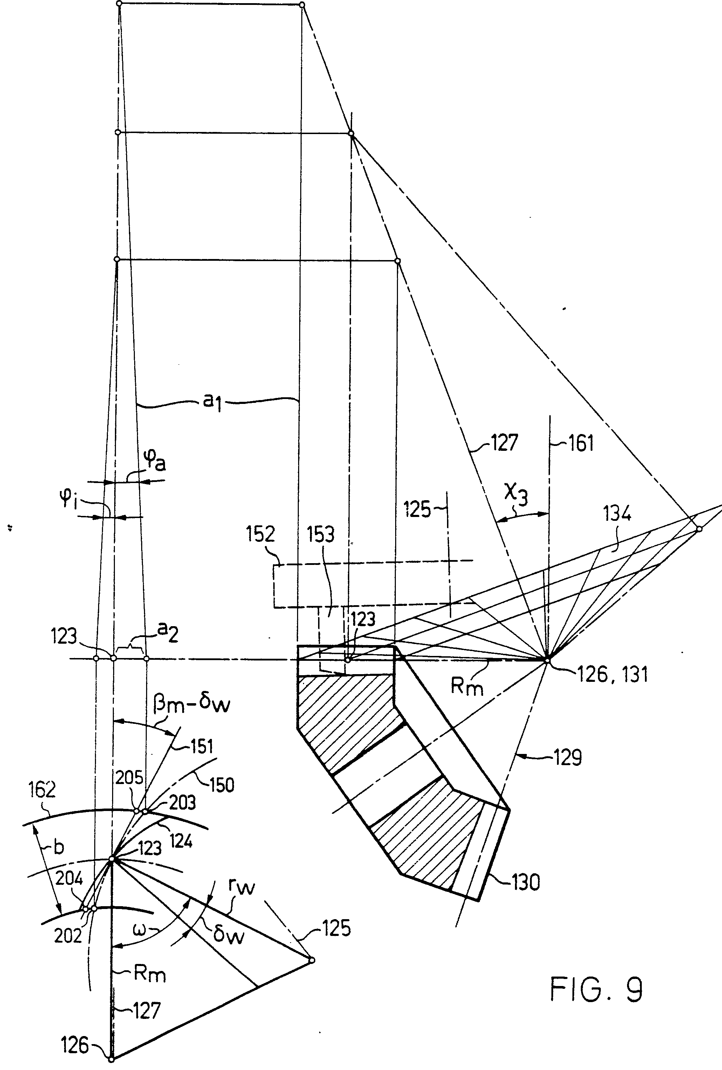

In Fig. 9 ist eine weitere schematische Anordnung der wichtigsten Elemente beim Schneiden von Zahnflanken dargestellt. Fig. 9 besteht aus einer Ansicht in der rechten Bildhälfte sowie einer dazu gehörenden schematischen Seitenansicht und einem Grundriß, beide in der linken Bildhälfte. Beide Ansichten und der Grundriß zeigen einen Berechnungspunkt 123 einer nur im Grundriß ersichtlichen Zahnlängslinie 124, die in üblicher Weise erzeugt wird, und eine Messerkopfachse 125, die der Messerkopfachse 11 in Fig. 4 entspricht. Da die Zahnflanke, die durch die Zahnlängslinie 124 dargestellt ist, durch einen Wälzvorgang hergestellt wird, ist auch eine Wälztrommelachse 127 eingezeichnet. Diese durchstößt in der Ansicht einen Teilkegel 129 eines herzustellenden Kegelrades 130 im Punkt 126, welcher mit der Spitze 131 des Teilkegels 129 zusammenfällt. Ebenfalls durch die Spitze 131 und um einen Winkel $\chi_3$ gegen die Wälztrommelachse 127 geneigt, verläuft eine Planradachse 161 eines teilweise und schematisch im Grundriß ersichtlichen Planrades 162. Ein Messerkopf 152 mit Messern 153 ist gestrichelt gezeichnet um die Messerkopfachse 125 drehbar angeordnet. Dabei bewegen sich auf einem Kreis 150 nicht näher dargestellte Messerteilpunkte. An den Kreis 150 ist im Berechnungspunkt 123 eine Tangente 151 gelegt. In der Ansicht betrachtet bewegen sich die Messerteilpunkte beim Wälzen auf einer Kegelfläche 134. Eine weitergehende Erklärung zu Fig. 9 findet bei der Darlegung der Berechnung statt.

In Fig. 10 ist für ein anderes Kegelrad 130' eine Wälztrommelachse 127' ebenfalls ersichtlich. Ein Teilkegel 129' des herzustellenden Kegelrades 130' schneidet in seiner Spitze 131' die Wälztrommelachse 127'. Durch diese Anordnung, bei der eine einen Messerteilpunkt 132 enthaltende Mantellinie 133 des Teilkegels 129' nicht mehr senkrecht, sondern zur Wälztrommelachse 127' hin geneigt ist, bewegt sich der Messerteilpunkt 132 beim Wälzen auf einer Kegelfläche 134'. Auch hier ist eine Planradachse 161', welche die Spitze 131' schneidet, ersichtlich. Diese steht senkrecht zum Planrad 162', von dem nur die Teilebene eingezeichnet ist. Planradachse 161' und Wälztrommelachse 127' schließen einen Winkel $\chi'_3$ ein.

Fig. 11 zeigt ein Tragbild 135 eines Zahnes 136, eines Zahnradpaares, wobei mindestens eines der beiden Zahnräder mit Maschineneinstellungen gemäß Fig. 9 und 10 hergestellt wurde. Eine Achse 137 des Tragbildes 135 verläuft dabei ungefähr in einer Diagonalen einer Zahnflanke 138.

Fig. 12 zeigt einen Schnitt in einer Teilfläche eines im Eingriff miteinander stehenden Zahnradpaares mit Zähnen 139 des einen und 140 des anderen Zahnrades, die eine positive Balligkeit aufweisen. Dies ist durch in den Randbereichen auftretende Luftspalte 141 erkennbar, die dort eine Breite LB betragen.

Fig. 13 zeigt einen Schnitt analog Fig. 12 durch ein Zahnradpaar mit Zähnen 142 bzw. 143, die eine negative Balligkeit aufweisen, was durch in Zahnmitte auftretende Luftspalte 144 erkennbar ist.

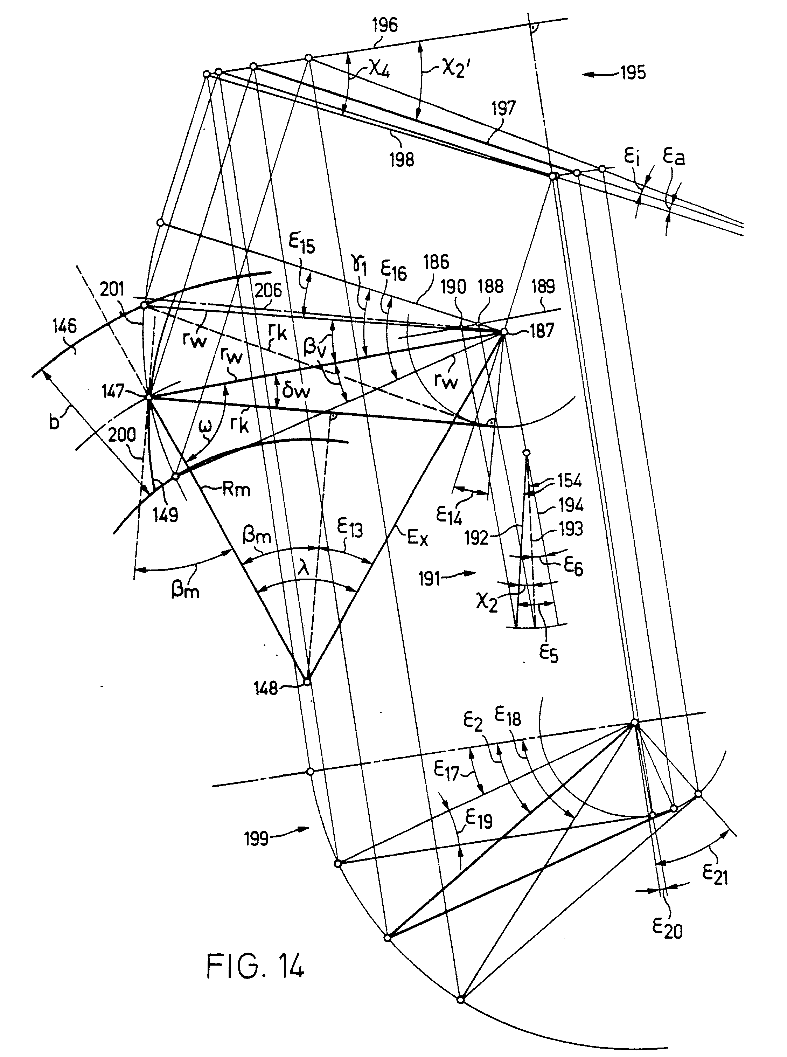

Fig. 14 zeigt eine schematische Darstellung der geometrischen Verhältnisse beim Erzeugen einer Zahnlängslinie 149 eines Planrades 146. Fig. 14 zeigt Größen, die im Verlaufe des später beschriebenen Rechnungsganges auftreten. In der Bildmitte ist ein Dreieck ersichtlich, das durch einen Messerradius $r_w$, einen Abstand $E_x$ und einen Planradius $R_m$ gebildet wird. Als Eckpunkte des Dreiecks erkennt man einen Berechnungspunkt 147 der Zahnlängslinie 149, einen Punkt 187, in welchem eine Messerkopfachse die Zeichnungs- oder Planradebene durchstößt, sowie ein Planradzentrum 148. im Planrad 146 ist b die Länge der Zähne in radialer Richtung. b entspricht somit der Breite des zu verzahnenden Rades, welches hier nicht näher dargestellt ist. An die Zahnlängslinie 149, die eine Zahnflanke darstellt, die nach einem kontinuierlichen Verfahren hergestellt ist, ist eine Tangente 200 gelegt. Sie schließt mit dem Planradius $R_m$ einen Spiralwinkel $\beta_m$ ein. Nicht näher dargestellte Teilpunkte der Schneiden der Messer bewegen sich auf einem Kreis 201 um den Punkt 187. Nach dem erfindungsgemäßen Verfahren eingestellte Messerkopfachsen erstrecken sich vom Punkte 187 aus beispielsweise zu einem Punkt 190. Dieser liegt in einer Vertikalebene zur Zeichnungsebene. Die Vertikalebene (entsprechend 27 gemäß Fig. 3) wird durch die Gerade 206 dargestellt, welche parallel zum Krümmungsradius $r_k$ im Berechnungspunkt 147 verläuft. Oder die Messerkopfachse erstreckt sich zu einem Punkt 188, was einer Neigung in der Schrägebene 30 gemäß Fig. 3 entspricht. Eine Gerade 189, welche die Punkte 188 und 190 miteinander verbindet, gehört in die Figur 3 übertragen zu der Ebene 31. Eine Umklappung 191 um die Gerade 189 zeigt den Abschnitt 154 einer Messerkopfachse in Stellungen gemäß der Geraden 192, 193 oder 194 in der Ebene 31 gemäß Fig. 3. Dabei erkennt man Winkel $\chi_2$, $\varepsilon_5$ und $\varepsilon_6$. Eine Linie 186 verbindet die Punkte 187 und 188 miteinander. Diese Linie 186 erscheint bei einer weiteren Umklappung 195 wieder als Linie 198. In der Umklappung 195 erkennt man die Ebene der Messerkopfradien $r_w$ als Linie 196 sowie eine Projektion des Krümmungsradius $r_k$ im Berechnungspunkt 147 als Linie 197. In der Umklappung 195 sind auch Winkel $\chi_4$ und $\chi'_2$ zu erkennen. Dabei entspricht der Winkel $\chi_4$ dem Winkel zwischen der Senkrechten 22 (Fig. 3) und der Endstellung der Messerkopfachse 11 in der Schnittlinie 29a. Ebenso ist die Verwindung der Zähne $\varepsilon_i$ für die innere Hälfte des Planrades 146 und $\varepsilon_a$ für die äußere Hälfte des Planrades 146 erkennbar. Eine Umklappung 199 um die Linie 196 dient insbesondere der Veranschaulichung von Winkeln $\varepsilon_2$, $\varepsilon_{17}$, $\varepsilon_{18}$, $\varepsilon_{19}$, $\varepsilon_{20}$ und $\varepsilon_{21}$, die Zwischenwerte für die Berechnung darstellen. Diese und weitere Größen, auf die noch nicht eingegangen wurde, werden in einem später folgenden Abschnitt noch ausführlich dargelegt.

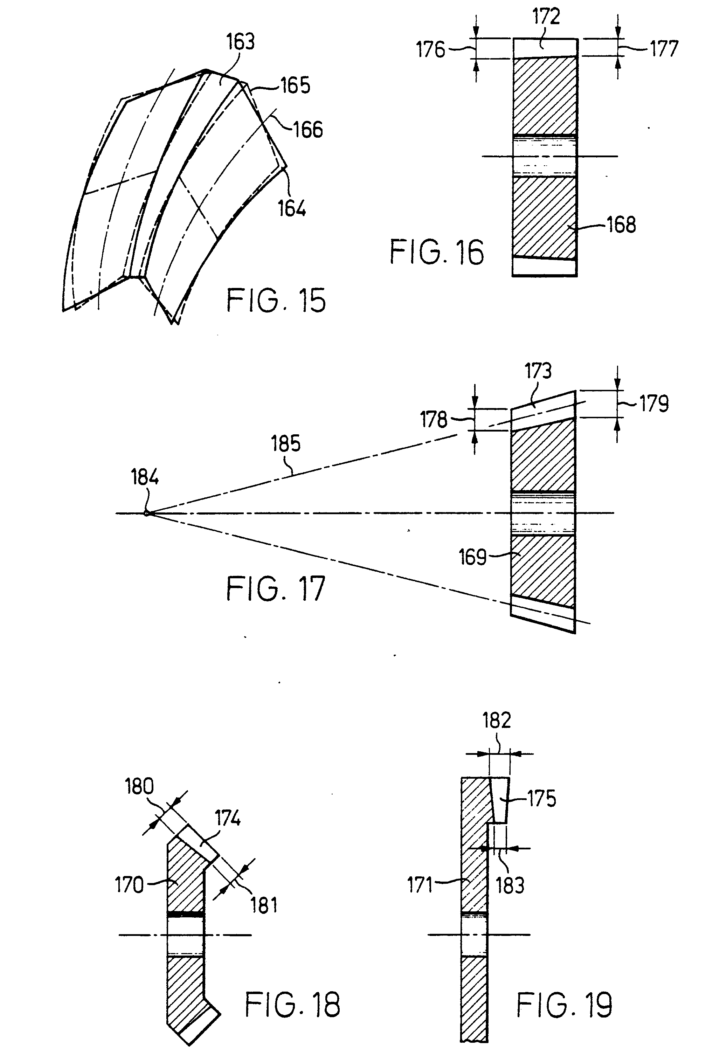

Fig. 15 zeigt einen Zahn 163 eines Zahnrades. In unverwundenem Zustand hat er beispielsweise eine Form 164 gemäß den ausgezogenen Linien. In verwundenem Zustand hat er eine Form 165, die durch die gestrichelten Linien dargestellt ist. Beiden Formen 164, 165 gemeinsam ist eine Zahnlängslinie 166 in der Teilfläche.

Die Figuren 16, 17, 18 und 19 zeigen je ein Stirnrad 168, je ein Kegelrad 169 und 170 und ein Tellerrad 171 im Schnitt. Alle diese nach dem erfindungsgemäßen Verfahren hergestellten Räder 168, 169, 170 und 171 weisen Zähne 172, 173, 174 bzw. 175 auf, die an ihren Enden unterschiedliche Zahnhöhen 176 und 177, 178 und 179, 180 und 181 bzw. 182 und 183 aufweisen. Bei Kegelrädern wie beispielsweise beim Kegelrad 169 ist vorzugsweise die kleinere Zahnhöhe 178 des Zahnes 173 einem Kegelzentrum 184 eines Teilkegels 185 zugewandt. Das Tellerrad 171 kann auch als Teil einer Klauenkupplung ausgelegt sein.

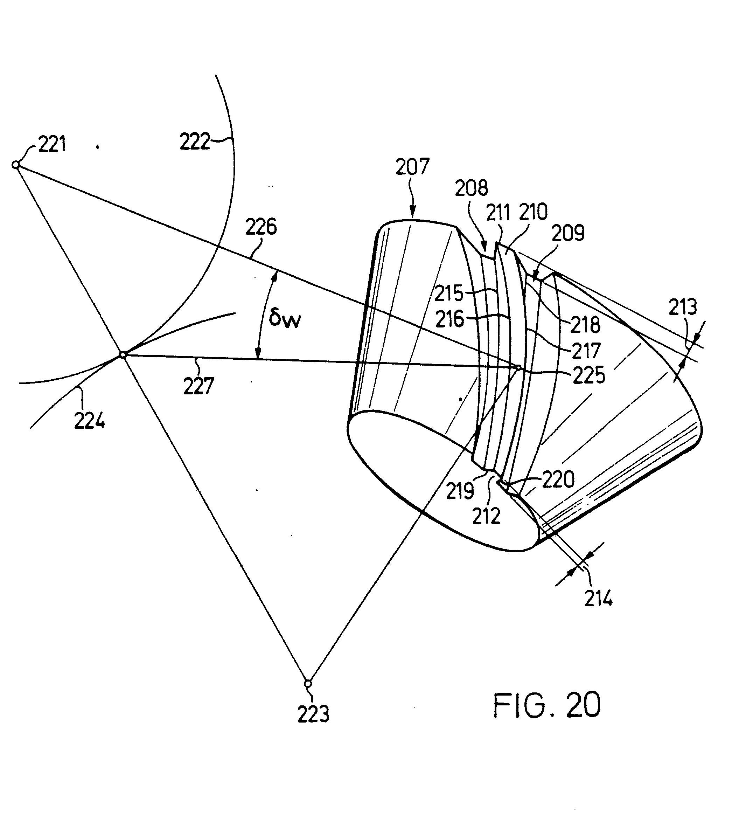

Fig. 20 zeigt ein Zahnrad 207, an dem beispielsweise zwei Zahnlücken 208 und 209 gezeigt sind, die durch einen Zahn 210 voneinander getrennt sind. An den Zahnenden 211 und 212 werden unterschiedliche Zahnhöhen 213 und 214 gemessen. Dabei ist beispielsweise die Zahnhöhe 213 größer als die Zahnhöhe 214. Der Zahn 210 wird durch zykloidenförmige Zahnlängslinien 215, 216, 217 und 218 begrenzt. In diesem Beispiel weist der Zahn 210 gerade Zahnflanken 219 und 220 auf. Ein Punkt 221 als Zentrum eines kleinen Rollkreises 222 und ein Punkt 223 als Zentrum eines großen Rollkreises 224 sind ebenfalls ersichtlich. Auf dem Zahn 210 ist ein Berechnungspunkt 225 angegeben. Dieser liegt aber in Wirklichkeit in der nicht näher eingezeichneten Teilfläche des Zahnrades 207. Die Punkte 221, 223 und 225 bilden eine Tangentialebene an die Teilfläche des Zahnrades 207. Darin ist der Orientierungswinkel $\delta_w$ zwischen einem Messerradius 226 und einem Krümmungsradius 227 beispielsweise der Zahnlängslinien 216 und 217 erkennbar. Selbstverständlich sind auch gewälzte, evolventenförmige Zahnflanken möglich und nach dem erfindungsgemäßen Verfahren herstellbar. Man erkennt dabei, daß der Orientierungswinkel $\delta_w$ größer ist als 19 Grad und somit in einem Bereiche liegt, für den das erfindungsgemäße Verfahren besonders vorteilhaft ist.

## Wirkungsweise

Zum Herstellen eines Zahnradpaares mit längsballiger Verzahnung kann sowohl die Verzahnung beider Räder als auch nur die Verzahnung eines Rades längsballig ausgeführt sein. Mit anderen Worten können die Innen- und die Außenflanken der Zähne des einen Rades gleiche Krümmungsradien aufweisen, während die Innenflanken und die Außenflanken der Zähne des Gegenrades verschiedene Krümmungsradien aufweisen. Da die Balligkeit einer Verzahnung ja dazu dient, die Berührungsfläche miteinander im Eingriff stehender Zahnflanken, das sogenannte Tragbild, zu beeinflussen, geht es darum, beim Herstellen der Verzahnung die Krümmungsradien miteinander kämmender Zahnflanken zu diesem Zwecke variieren zu können.

Nachfolgend wird das erfindungsgemäße Verfahren zur Herstellung längsballiger Verzahnungen am Beispiel eines Kegelrades eingehend beschrieben. In an sich bekannter Weise wird gemäß Fig. 1 ein Kegelradkörper 8' (Fig. 2) auf der Spindel 9 und auf der Schwenkvorrichtung 10 ein Messerkopf 12 befestigt. Ausgehend von der dem Fachmann bekannten Einstellung der Verzahnungsmaschine 1 zum Herstellen einer nicht balligen Verzahnung am Kegelradkörper 8', ist die Einstellung der Messerkopfachse 11 des Messerkopfes 12 für das erfindungsgemäße Verfahren zu korrigieren. In Fig. 3 stellt die Senkrechte 22 die Stellung der Messerkopfachse 11 in der erwähnten Einstellung für nicht ballige Verzahnungen dar. Davon ausgehend wird erfindungsgemäß die Messerkopfachse 11 in der Vertikalebene 27 um den Winkel $\chi_1$ gegen die Mantellinie 19, die den Berechnungspunkt 15 trägt, geneigt, bis sie beispielsweise die Stellung der Schnittlinie 29 erreicht. Wie groß der Winkel $\chi_1$ sowie die weiteren Winkel und Abstände gewählt werden sollen, von denen noch die Rede sein wird, wird später in einem anderen Abschnitt bekannt gegeben. Von der um den Winkel $\chi_1$ geneigten Stellung aus kann, um weitere Korrekturen an den Zahnflanken zu bewirken, in entgegengesetzter Richtung weiter um den Winkel $\chi_2$ geschwenkt werden. Dies allerdings in der Ebene 31, so daß am Schluß die Messerkopfachse 11 in der Schnittlinie 29a mit der Schrägebene 30 liegt.

Es ist klar, daß die eben erwähnte, um einen Winkel $\chi_4$ geneigte beispielsweise für ein bestimmtes Rad gewünschte Endstellung der Messerkopfachse 11 in der Schnittlinie 29a auch erreicht werden kann durch Neigung der Messerkopfachse 11 um einen kleineren Winkel $\chi'_1$ in die Stellung 167, sowie durch anschließendes Neigen um einen Winkel $\gamma$, wie dies der Neigung der Vertikalebene 27 in die Schrägebene 30 entsprechen würde. Ebenso denkbar wären eine Anzahl anderer Wege, um die Messerkopfachse 11 in eine gewünschte Endstellung 29 oder 29a bringen zu können. Sofern einer dieser Wege die Messerkopfachse 11 in eine Stellung bringt, in der sie in eine Ebene gelangt, welche diejenigen Eigenschaften aufweist, wie sie die Ebenen 27 und 30 aufweisen, so ist diese Stellung der Messerkopfachse als unter den Schutzbereich dieser Erfindung fallend zu betrachten. Für den eben beschriebenen Weg mit Neigungen der Messerkopfachse 11 in den Ebenen 27 und 30 wird später die Berechnung dargelegt.

Nimmt die Messerkopfachse 11 beispielsweise eine Stellung wie die Schnittlinie 29a gemäß Fig. 3 ein, so müssen auch die Messer auf dem Messerkopf in passender Art und Weise angeordnet sein. Diese Anordnung besteht unter anderem darin, daß deren Schneiden 37, 40, wie aus Fig. 4 hervorgeht, beim Durchgang durch die Radialebene 25, die in Fig. 4 der Zeichnungsebene entspricht, mit einer Senkrechten 22' zur Tangentialebene 14 je einen Winkel $\alpha$ bzw. $\alpha'$ einschließen. Bei unterschiedlichen Krümmungsradien 46, 47 der Messerbahnen bzw. Zahnlängslinien 43, 44 müssen die Teilpunkte 38 und 41 der Außen- und Innenschneiden 37 und 40 auf Außen- und Innenteilpunktebenen 39 und 42 angeordnet sein. Diese sind parallel zueinander und bezogen auf die Stellung der Messerkopfachse 11 in der Schnittlinie 29a in Fig. 3, parallel bzw. identisch zu der Teilpunktebene 32, welche gebildet wird aus der Senkrechten 34 und dem Teilpunkradius 33.

Somit nimmt nun die Messerkopfachse ·11 bzw. der Messerkopf 12 die in Fig. 1 und 2 ersichtliche neue Stellung zum Kegelradkörper 8' bzw. Kegelrad 8 ein. Fig. 1 zeigt zusätzlich noch die Stellung, die ein Messerkopf 13 beim Verzahnen eines Gegenrades zum Kegelrad 8 einnimmt. Wird dabei gleiche Balligkeit wie für die Zähne von Kegelrad 8 gewünscht, ist diese Stellung symmetrisch zur Achse 17.

Der zum Verzahnen von Zahnrädern bei Neigung der Messerkopfachse 11 in der eben beschriebenen Art zu verwendende Messerkopf 12 bzw. 85 kann verschiedenartige Messergruppen 69, 70, 71 bzw. 72 aufweisen, wie das aus Fig. 6 ersichtlich ist. Dabei liegen die Teilpunkte 38 der Außenschneiden 37 wie aus Fig. 4 ersichtlich in einer Teilpunktebene 39, die näher beim Messerkopfgrundkörper 145 liegt als die Teilpunktebene 42 der Teilpunkte 41 der Innenschneiden 40. Dasselbe gilt für die entsprechenden Teilpunkte und Innen- und Außenschneiden des Messerkopfes 85 aus Fig. 6. Eine Ausnahme bildet die Messergruppe 72 des Messerkopfes 85, die die Erzeugung negativer Balligkeit ermöglicht. Hier liegt die Teilpunktebene der Teilpunkte 103 der Innenschneiden 104 näher beim Messerkopfgrundkörper 145 als die Teilpunktebene der Teilpunkte 100 der Außenschneiden 101.

Weiter sind, wie an sich bereits erwähnt aber aus den Fig. 7 und 8 ebenfalls hervorgeht, die Außen- und die Innenschneiden 110, 111 und 112, 113 derart an den Messerköpfen 106 und 107 bzw. 108 und 109 anzubringen, daß beim Durchgang der Außen- bzw. Innenschneiden 110 und 111 bzw. 112 und 113 durch den Berechnungspunkt einer Zahnflanke, diese Außen- und Innenflanken 110 und 111 bzw. 112 und 113 jeweils um einen Winkel $\alpha$ bzw. $\alpha'$ gegen eine Senkrechte 122 zur Teilebene 120 bzw. 121, die auch der Tangentialebene 14 in Fig. 3 entspricht, geneigt sind. Der Winkel $\alpha$ bzw. $\alpha'$ soll mindestens ungefähr dem Normaleingriffswinkel der Verzahnung im Eingriff entsprechen.

Soll statt eines Kegelrades 8 ein Stirnrad auf der an sich bekannten Verzahnungsmaschine 1 hergestellt werden, so muß in an sich bekannter Weise der Messerkopf 12 auf der Spindel 9 des Spindelstockes 5, der Stirnradkörper aber auf der Wälztrommel 4 befestigt werden. Dabei werden nun, ausgehend von der bekannten Stellung von Messerkopfachse und Teilfläche des Stirnrades gegeneinander, die eben beschriebenen erfindungsgemäßen Korrekturen vorgenommen. In diesem Fall muß die Stirnradachse Bewegungen so ausführen, daß die Messerkopfachse 11 relativ dazu in die gewünschte Stellung gelangt. Dies, weil bei der Verzahnungsmaschine 1 nur die Wälztrommel 4 eine Schwenkeinrichtung 10 aufweist, die diese Korrekturbewegungen erlaubt.

Bei der Berechnung der für das Verzahnungsverfahren sowie zur Auslegung eines geeigneten Messerkopfes dazu relevanten Größen geht man wie folgt vor.

Beispielsweise ist ein bestimmtes gewünschtes Rad zu verzahnen, das eine Breite bzw. eine Zahnlänge b (siehe Fig. 14) aufweist. Weiter sind das Normalmodul $m_n$, der Normaleingriffswinkel $\alpha_n$ sowie der Spiralwinkel $\beta_m$ der Verzahnung vorgegeben. Ebenso ist der mittlere Radius $R_m$ des Planrades 146, das für die Berechnung herangezogen wird, bekannt. Zum Beispiel ist der Planradradius $R_m$ für ein Kegelrad gleich dem Abstand vom Berechnungspunkt 147 der Zahnlängslinie 149 zu einem Kegelzentrum 148, das mit dem Planradzentrum 148 identisch ist. Vorgegeben wird die gewünschte Längsballigkeit LB (Fig. 12).

Ferner ist ein Messerkopf verfügbar, der eine Anzahl $Z_w$ Messergruppen enthält, deren Messer in radialer Richtung noch eingestellt werden müssen. Ein mittlerer Messerradius der Schneidkanten ist ebenfalls gegeben und beträgt $r_w$. Zu dieser Anordnung der Messer auf dem Messerkopf ist auch der Wert F bekannt. F ist ein Versetzungswinkel, der auftritt bei Versetzung der Innen- bzw. Außenschneiden aus der Stellung, die sie bei einem Messerkopf einnehmen, der nur eine Innen- und eine Außenschneide aufweist. Dabei hat diese Versetzung der Innen- bzw. Außenschneiden längs der jeweiligen Zykloide zu erfolgen und teilt sich wiederum auf die Anzahl $Z_w$ der Messergruppen auf, sofern mehrere davon vorhanden sind. Für den Fall, daß die Versetzung $\varepsilon_1$ der Messer aus der gleichmäßigen Winkelaufteilung $\delta$ bekannt ist, läßt sich der Wert F aus Gleichung (1) berechnen, die lautet :

$$\varepsilon_1 = \frac{F}{2 \cdot Z_w} \text{ bzw. } \varepsilon_3 = \frac{F_3}{2 \cdot Z_w}; \ \varepsilon_4 = \frac{F_4}{2 \cdot Z_w}. \tag{I}$$

Aus diesen bekannten Größen lassen sich weitere, für die Berechnung notwendige Größen ableiten. Es sind dies :

(Vergleiche Fig. 14)
$$\text{ein Orientierungswinkel } \delta_w = \frac{Z_w \cdot m_n}{2 \cdot r_w}, \tag{II}$$

$$\text{ein Winkel } \omega = 90° - \beta_m + \delta_w, \tag{III}$$

$$\text{eine Zähnezahl des Planrades } Z_p = \frac{2 \cdot R_m \cdot \cos \beta m}{m_n}. \tag{IV}$$

Der Abstand von $E_x$ vom Planrad-Zentrum zu der

$$\text{Messerkopfachse: } E_x = \sqrt{R_m^2 + r_w^2 - 2 R_m \cdot r_w \cdot \cos \omega}, \tag{V}$$

$$\text{ein Winkel } \lambda \text{ aus } \cos \lambda = \frac{R_m^2 + E_x^2 - r_w^2}{2 \cdot R_m \cdot E_x}, \tag{VI}$$

$$\text{ein Winkel } \varepsilon_{13} = \lambda - \beta_m. \tag{VII}$$

und ein Außen- und ein Innenschneidenradius aus

$$r_{w_a} - r_w = r_w - r_{w_i} = \frac{m_n \cdot \pi \cdot F}{2 \cdot 360° \cdot \cos \delta_w}. \tag{VIII}$$

Dies gilt für Außen- und Innenschneiden, die je um den gleichen Wert F bzw. Winkel $\varepsilon_1$ aus der gleichmäßigen Winkelaufteilung $\delta$ versetzt sind. Andernfalls sind Innen- und Außenradius aus dem jeweiligen F-Wert bzw. Winkel $\varepsilon_3$ bzw. $\varepsilon_4$ separat zu berechnen.

Aus Gleichung IX läßt sich derjenige Anteil $LB_R$ an der Längsballigkeit LB berechnen, der die Folge des Unterschiedes der Messerradien der Außen- bzw. Innenmesser bildet :

$$LR_R = \sqrt{r_{w_a}^2 - \left(\frac{b}{2 \cos (\beta_m - \delta_w)}\right)^2} - \sqrt{r_{w_i}^2 - \left(\frac{b}{2 \cos (\beta_m - \delta_w)}\right)^2} - \frac{F \cdot m_n}{\dfrac{360°}{\pi} \cos \delta_w}; \tag{IX}$$

Da der die Messerkopfachse um den Winkel $\kappa_1$ geneigt ist, muß auch dieser Winkel $\kappa_1$ berechnet werden. Dies geschieht mit Hilfe der Gleichungen X und XI.

$$\operatorname{tg} \beta' = \operatorname{tg} \delta_w \cdot \operatorname{tg} \kappa_1 \cdot \operatorname{tg} \alpha. \tag{X}$$

Dabei berechnet sich ein Flankenrichtungsfehler $\beta'$ aus Gleichung XI :

$$\operatorname{tg} \beta' = \frac{F \cdot \sin \varepsilon_{13} \cdot \cos \beta_m}{\dfrac{360°}{\pi} \cdot Z_p \cdot \sin d\, \lambda}. \tag{XI}$$

Diese Schiefstellung der Messerkopfachse um den Winkel $\kappa_1$ hat eine Verminderung der Balligkeit um einen Betrag $LB_R$, zur Folge, der sich folgendermaßen berechnet aus Gleichung XII :

$$LB_{R'} = \left[ r_w - \sqrt{r_w^2 - \left(\frac{b}{r_w \cdot 2 \cdot \cos (\beta_m - \delta_w)}\right)^2} \right] \cdot \operatorname{tg} \kappa_1 \cdot \operatorname{tg} \alpha \cdot 2 \cdot \cos \delta_w \tag{XII}$$

Trotzdem die Kopffläche und die Fußfläche der Zähne durch diese Schiefstellung nicht mehr parallel zueinander verlaufen, entstehen zu den Zahnenden hin nur vernachlässigbar kleine Eingriffswinkelfehler $\varepsilon_{10}$.

Diese berechnen sich wie folgt :

Für die Zahnmitte :

$$\sin \varepsilon_{10} = [\operatorname{tg} \delta_w \cdot \sin \varepsilon_9 - \cos \kappa\ (1 - \cos \varepsilon_9)] \cdot \cos \delta_w \cdot \sin \kappa_1, \tag{XIII}$$

$$\text{wobei } \sin \varepsilon_9 = \frac{\sin \delta_w}{\cos \kappa_1}.$$

Für den Zahnaußenrand ergibt sich

$$\sin \varepsilon_8 = [\operatorname{tg} \delta_w \cdot \sin \varepsilon_7 - \cos \kappa_1 (1 - \cos \varepsilon_7)] \cdot \cos \delta_w \cdot \sin \kappa_1, \tag{XIV}$$

$$\text{wobei } \sin \varepsilon_7 = \sin \frac{(\delta_w - \beta_v)}{\cos \kappa_1}.$$

$$\text{und } \sin \beta_v = \frac{b}{2 \cdot r_w \cdot \cos (\beta_m - \delta_w)}.$$

Für den Zahninnenrand ergibt sich

$$\sin \varepsilon_{12} = [\operatorname{tg} \delta_w \cdot \sin \varepsilon_{11} - \cos \kappa_1 (1 - \cos \varepsilon_{11})] \cdot \cos \delta_w \cdot \sin \kappa_1, \tag{XV}$$

$$\text{wobei } \frac{\sin (\delta_w + \beta_v)}{\cos \kappa_1} = \sin \varepsilon_{11}.$$

Entspricht die bisher erzeugte Gesamtballigkeit $LB = LB_R - LB_{R'}$, dem ursprünglich vorgegebenen Wert für LB, so ist die Rechnung somit abgeschlossen. Die Messerkopfachse 11 ist dabei nur in der Vertikalebene 27 geschwenkt worden.

Entspricht die bisher erzeugte Gesamtballigkeit dem vorgegebenen Wert für LB nicht, so muß ein weiterer Balligkeitsbeitrag $LB_N$ geleistet werden. $LB_N$ wird erreicht durch Neigung der Messerkopfachse 11 um einen Winkel $\kappa_2$.

Aus der Gesamtballigkeit

$$LB = LB_R - LB_{R'} + LB_N \qquad (XVI)$$

ergibt sich der gewünschte Wert für $LB_N$ und aus der Gleichung (XVII) läßt sich der Winkel $\kappa_2$ bestimmen.

$$\operatorname{tg} \kappa_2 = \frac{LB_N}{r_w - \sqrt{r_w^2 - \left(\dfrac{b}{r_w \cdot 2 \cdot \cos(\beta_m - \delta_w)}\right)^2} \cdot \operatorname{tg} \alpha_n} \cdot \qquad (XVII)$$

Die Neigung der Messerkopfachse 11 um den Winkel $\kappa_2$ in der Art wie sie anhand von Fig. 3 erläutert ist, bewirkt eine Zahnverwindung. Um diese Zahnverwindung bestimmten zu können, müssen zuerst die folgenden Zwischenwinkel und Größen berechnet werden :

Aus Gleichung XVIII der Winkel $Y_1$,

$$\operatorname{tg} Y_1 = \frac{\operatorname{tg} \kappa_1 \cdot \sin \delta_w \cdot \cos \varepsilon_5}{\sin \varepsilon_6}, \qquad (XVIII)$$

davon sind die Winkel $\varepsilon_5$ und $\varepsilon_6$ noch nicht bekannt. Sie ergeben sich aus :

$$\operatorname{tg} \varepsilon_5 = \operatorname{tg} \kappa_1 \cdot \cos \delta_w \quad \text{und} \quad \varepsilon_6 = \varepsilon_5 - \kappa_2 \, .$$

Der Winkel $Y_1$ liegt zwischen dem Messerradius $r_w$ im Berechnungspunkt 147 und der Linie 186, die durch je einen Punkt 187 der Senkrechten 22 und einem Punkt 188 der Messerkopfachse 11 in ihrer Stellung in der Schnittlinie 29a gemäß Fig. 3 gelegt ist. Eine Gerade 189 durch den Punkt 188 und dem Punkt 190 der Schnittlinie 29 gemäß Fig. 3 liegt in der Ebene 31 (Fig. 3). Die Punkte 188 und 189 liegen dabei in einer hier nicht dargestellten Parallelebene zur Tangentialebene 14, welche aus Fig. 3 bekannt ist. In der Umklappung 191 um die Gerade 189 ist der Abschnitt 154 der Messerkopfachse 11 (Fig. 3) in verkleinertem Maßstab ersichtlich. Dabei entspricht die Gerade 192 der Stellung gemäß Schnittlinie 29, die Gerade 193 der Stellung gemäß Schnittlinie 29a und die Gerade 194 der Senkrechten 22 in Fig. 3. In dieser Umklappung 191 lassen sich die Winkel $\varepsilon_5$, $\varepsilon_6$ und $\kappa_2$ in ihrer Projektion auf die Ebene 31 (Fig. 3) erkennen.

Ein Messerkopfneigungswinkel $\kappa_2'$ läßt sich in seiner wirklichen Größe in einer Umklappung 195 um die Linie 186 erkennen. Die Linie 196 entspricht der Ebene der Messerkopfradien $r_w$. Eine Linie 197 entspricht einer Projektion des Krümmungsradius $r_k$ der Zahnlängslinie 149 auf die bereits genannte Ebene der Messerkopfradien $r_w$. Es gilt :

$$\operatorname{tg} \kappa_2' = \frac{\operatorname{tg} \varepsilon_6}{\cos Y_1} \cdot \qquad (XIX)$$

Der Winkel $\kappa_4$, welcher in der Umklappung 195 zwischen der Linie 196 und der Linie 198, welche der Linie 186 im Grundriß entspricht, auftritt, berechnet sich wie folgt :

$$\sin \kappa_4 = (\cos Y_1 + \sin \delta_w \cdot \sin \varepsilon_{14}) \cdot \sin \kappa_2', \qquad (XX)$$

wobei $\varepsilon_{14} = Y_1 - \delta_w$ bedeutet.

Weiter sind Winkel

$$\varepsilon_2 \text{ aus } \sin \varepsilon_2 = \frac{\sin Y_1}{\cos \kappa_4}$$

$$\varepsilon_{15} = Y_1 - \beta_v,$$

$$\varepsilon_{16} = Y_1 + \beta_v,$$

$$\varepsilon_{17} \text{ aus } \sin \varepsilon_{17} = \frac{\sin \varepsilon_{15}}{\cos \kappa_4},$$

$$\varepsilon_{18} \text{ aus } \sin \varepsilon_{18} = \frac{\sin \varepsilon_{16}}{\cos \kappa_4},$$

$$\varepsilon_{19} \text{ aus } \sin \varepsilon_{19} = \frac{\sin \delta_w}{\cos \kappa_4},$$

$$\varepsilon_{21} = \varepsilon_{17} - \varepsilon_{19},$$

$$\varepsilon_{21} = \varepsilon_{18} - \varepsilon_{19},$$

zu berechnen. Diese sind in Fig. 14 vor allem in einer Umklappung 199 um die Linie 196 eingetragen. Es handelt sich dabei lediglich um Zwischenwerte, die so berechnet werden, weil man andernfalls für die Zahnverwindung eine sehr komplizierte Formel angeben müßte.

Ferner sind noch Hilfswerte $e_1$, $e_2$, $e_3$ und $e_4$ zu berechnen.

$$e_1 = tg\,\delta_w \left( \frac{\sin \varepsilon_{14}}{\cos \kappa_2'} - \sin \varepsilon_{20} \right),$$

$$e_2 = \frac{\cos \kappa_4 \,(\cos \varepsilon_2 - \cos \varepsilon_{17})}{\cos \delta_w},$$

$$e_3 = \frac{\cos \kappa_4 \,(\cos \varepsilon_2 - \cos \varepsilon_{18})}{\cos \delta_w},$$

$$e_4 = tg\,\delta_w \left( \frac{\sin \varepsilon_{14}}{\cos \kappa_2'} - \sin \varepsilon_{21} \right).$$

Aus Gleichung XXI erhält man den Verwindungswinkel außen $\varepsilon_a$ :

$$\sin \varepsilon_a = (e_1 + e_2) \cdot \sin \kappa_2'. \tag{XXI}$$

Aus Gleichung XXII den Verwindungswinkel innen $\varepsilon_i$ :

$$\sin \varepsilon_i = (e_3 + e_4) \cdot \sin \kappa_2'. \tag{XXII}$$

Die totale Zahnverwindung zwischen beiden Zahnenden beträgt somit :

$$\varepsilon_{10} = \varepsilon_i - \varepsilon_a. \tag{XXIII}$$

Bei Belastung eines Zahnradpaares im praktischen Betrieb verlagern sich die Achsen der Räder zueinander. Dadurch wird auch das Tragbild verändert. Um aber unter Belastung richtiges Zahntragen zu bewirken, kann es wünschbar sein, bei der Fertigung eines Zahnradpaares eine gewisse Zahnverwindung zu erzeugen. Dies um eine unerwünschte Verlagerung des Tragbildes unter Last zu vermeiden.

Falls durch Neigung der Messerkopfachse 11 um die Winkel $\kappa_1$ oder $\kappa_1$ und $\kappa_2$ die gewünschte Verwindung $\varepsilon_{20}$ noch nicht erreicht wurde, kann sie bei gewälzten Zahnflanken durch Neigung von Messerkopfachse und Wälztrommelachse gemäß Fig. 9 und 10 gegeneinander weiter beeinflußt werden. Dies ergibt eine Verwindung um Winkel $\varphi_a + \varphi_i$.

Der Winkel $\varphi_a$, welcher der Verwindung in der äußeren Radhälfte entspricht, ergibt sich aus Gleichung (XXIV).

$$\sin \varphi_a = \frac{a_2}{a_1} = \frac{b \cdot tg\,(\beta_m - \delta_w) \cdot \sin \kappa_3}{2 \cdot R_m}, \tag{XXIV}$$

wobei

$$a_1 = \frac{R_m}{\sin \kappa_3}$$

und

$$a_2 = \frac{b}{2} \cdot tg\,(\beta_m - \delta_w).$$

Der Winkel $\varphi_i$, welcher der Verwindung in der inneren Radhälfte entspricht, berechnet sich auch gleiche Weise oder kann näherungsweise $\varphi_a$ gleichgesetzt werden. Dies jedenfalls, wenn man, wie oben geschehen, statt von Schnittpunkten 202 und 203 der Messerbahn mit den inneren und äußeren Begrenzungen des Planrades 162, von Schnittpunkten 204 und 205 mit der Tangente 151 an die Messerbahn 150 ausgeht.

Ausgehend von einem nicht verwundenen Zahn, ergibt sich bei so korrigierten Zähnen 136 ein Tragbild 135 wie in Fig. 11 gezeigt. Dessen Achse 137 verläuft diagonal über die Zahnflanke 138. Ausgehend von verwundenen Zähnen wird die diagonale Stellung der Achse 137 vermindert, so daß das gewünschte Tragbild entsteht.

**Patentansprüche**

1. Verfahren zum Erzeugen von Zahnrädern mit längsballigen Zähnen durch Schneiden von

EP 0 046 311 B2

Zahnflanken nach einem kontinuierlichen Verfahren mit einem um eine Messerkopfachse (11) rotierenden und mit Aussen- und/oder Innenschneiden (37 und 40) aufweisenden Messern (35, 36) versehenen Messerkopf (12), wobei die Erzeugung von beiden Flanken einer Zahnlücke in einem einzigen Arbeitsgang erfolgt, enthaltend die folgenden Verfahrensschritte :

— Neigen der Messerkopfachse (11) aus einer Senkrechten (22) zu einer an einen Berechnungspunkt (15) einer Zahnlängslinie (20) einer Teilfläche (18) eines Zahnrades angelegten Tangentialebene (14) in einer bzw. in eine Ebene (27 bzw. 30), welche senkrecht bzw. annähernd senkrecht zur Tangentialebene (14) und mindestens annähernd parallel zu einem Krümmungsradius (24) der Zahnlängslinie (20) im Berechnungspunkt (15) verläuft,

— Einstellen der Messer (35, 36) am Messerkopf (12, 85) derart, dass

Teilpunkte (73, 86 bzw. 96) der Aussenschneiden (79, 88 bzw. 94) auf einem ersten Kreis (75', 90' bzw. 98') mit einem ersten Radius (75, 90 bzw. 98) und Teilpunkte (74, 87 bzw. 97) der Innenschneiden (80, 89 bzw. 95) auf einem zweiten Kreis (76', 91' bzw. 99') mit einem zweiten Radius (76, 91 bzw. 99) angeordnet sind,

die Aussenschneiden (79, 88 bzw. 94) je um einen Winkel $\varepsilon_3$ und die Innenschneiden (80, 89 bzw. 95) je um einen Winkel $\varepsilon_4$ aus der gleichmässigen Winkelaufteilung $\delta$ versetzt angeordnet sind und

die Aussenschneiden (37) bzw. die Innenschneiden (40) im Einsatz beim Durchdringen des Berechnungspunktes (15 bzw. 38 und 41) je einen Winkel $\alpha$ bzw. $\alpha'$ mit einer Senkrechten (22') zur Tangentialebene (14) bilden, wobei die wirksame Gesamtballigkeit (LB) aus einem Anteil ($LB_R$, bzw. $LB_N$) der Neigung der Messerkopfachse (11) in der bzw. in die Ebene (27 bzw. 30) und einem Anteil ($LB_R$) der unterschiedlichen Radien der Aussen- und Innenschneiden (37 und 40) gebildet wird.

2. Verfahren gemäss Anspruch 1, dadurch gekennzeichnet, dass der erste Radius (75, 90 bzw. 98) grösser als der zweite Radius (76, 91 bzw. 99) gewählt wird zum Erzeugen einer positiven Balligkeit.

3. Verfahren gemäss Anspruch 2, dadurch gekennzeichnet, dass die Messerkopfachse (11) mit ihrem aus der Teilfläche (18) abgewandten Seite der Tangentialebene (14) herausragenden Abschnitt (154) gegen die Teilfläche (18) hin geneigt wird, zur Verminderung der positiven Balligkeit.

4. Verfahren gemäss Anspruch 3, dadurch gekennzeichnet, dass die Messerkopfachse (11) zuerst in einer Vertikalebene (27), welche senkrecht zur Tangentialebene (14) steht, geneigt wird.

5. Verfahren gemäss Anspruch 4, dadurch gekennzeichnet, dass die Messerkopfachse (11) anschliessend in eine Schrägebene (30) geneigt wird, welche mit der Vertikalebene (27) eine Parallele (28) zum Krümmungsradius (24) gemeinsam hat und um einen Winkel $\gamma$ gegen die Vertikalebene (27) geneigt ist.

6. Verfahren gemäss Anspruch 4, dadurch gekennzeichnet, dass die Messerkopfachse (11) aus der Vertikalebene (27) in einer weiteren Ebene (31), welche mit einer Radialebene (25) eine Verbindungslinie (26) als Schnittgerade mit der Tangentialebene (14) gemeinsam hat, in die Schrägebene (30) geneigt wird.

7. Verfahren gemäss Anspruch 6, dadurch gekennzeichnet, dass die Messerkopfachse (11) um einen Winkel $\chi_1$ in der Vertikalebene (27) in eine Schnittlinie (29) und in der weiteren Ebene (31) um einen Winkel $\chi_2$ in eine Schnittlinie (29a) mit der Schrägebene (30) geneigt wird, wobei der Winkel $\gamma$ für die Schrägebene (30) sich entsprechend dem Winkel $\chi_2$ einstellt.

8. Verfahren gemäss Anspruch 1, wobei Messerkopf (12) und Zahnrad relativ zueinander ein Wälzbewegung um eine Wälztrommelachse (127) ausführen, dadurch gekennzeichnet, dass eine Planradachse (161) relativ zur Wälztrommelachse (127) um einen Winkel $\chi_3$ gegen einen Berechnungspunkt (123) geneigt wird.

9. Messerkopf (106 und 108 bzw. 107 und 109) zur Durchführung des Verfahrens nach Anspruch 1, in einer Vergleichsstellung mit einem Messerkopf (107 und 109 bzw. 106 und 108) zur Herstellung eines Gegenrades, in der ein Schnittpunkt (155 bzw. 156) der Messerkopfachsen (116 und 117 bzw. 118 und 119) und Teilpunkte (157 und 158 bzw. 159 und 160) je einer Aussenschneide (110 bzw. 111) und einer Innenschneide (112 bzw. 113) in einer gemeinsamen Teilebene (120 bzw. 121) liegen und Projektionen der Innenschneiden (112 bzw. 113) und der Aussenschneiden (110 bzw. 111) auf einer Radialebene (25), welche senkrecht steht zu der gemeinsamen Teilebene (120 bzw. 121), mindestens annähernd parallel zueinander verlaufen, dadurch gekennzeichnet, dass zwischen Innenschneide (112 bzw. 113) und Aussenschneide (110 bzw. 111) ein Radiusunterschied (114 bzw. 115) vorhanden ist und die Messerkopfachsen (116 und 117 bzw. 118 und 119) einen Winkel $\eta$ einschliessen, der kleiner ist als 180°.

## Claims

1. Method for fabricating gears possessing lengthwise crowned teeth by cutting teeth flanks in a continous gear-cutting operation with a cutter head (12) rotating about a cutter head axis (11) and equipped with cutters (35, 36) possessing external cutting edges (37) and/or internal cutting edges (40), wherein the fabrication of both tooth flanks of a tooth gap of the gear is accomplished during a single working operation, comprising the following method steps :

— inclining the cutter head axis (11) out of a normal (22) to a tangential plane (14) taken through an operating pitch point(15) of tooth lengthwise line (20) of a pitch surface (18) of a gear in a respective into a plane (27 resp. 30) which is disposed perpendicular respective approximately perpendicular to the tangential plane (14) and extends at least approximately parallel to a radius of curvature (24) of the tooth lengthwise line (20) at the operating pitch point (15),

— setting the cutters (35, 36) at the cutter head (12, 85) such that,

pitch points (73, 86 resp. 96) of the external cutting edges (79, 88 resp. 94) are arranged at a first circle (75', 90' resp. 98') having a first radius (75, 90 resp. 98) and pitch points (74, 87 resp. 97) of the internal cutting edges (80, 89 resp. 95) are arranged at a second circle (76', 91' resp. 99') having a second radius (76, 91 resp. 99),

the external cutting edges (79, 88 resp. 94) are arranged in offset relationship with respect to a first predetermined angle $\varepsilon_3$ and the internal cutting edges (80, 89 resp. 95) are arranged in offset relationship with respect to a second predetermined angle $\varepsilon_4$ out of a substantially uniform angle distribution $\delta$ and

the external cutting edges (37) respective the internal cutting edges (40) during use upon penetration through the operating pitch point (15 resp. 38 and 41) each form an angle $\alpha$ respective $\alpha'$ with a normal (22') to the tangential plane (14), wherein the effective total crown (LB) is formed with a portion ($LB_R$, resp. $LB_N$) of the inclination of the cutter head axis (11) in the respective into the plane (27 resp. 30) and a portion ($LB_R$) of the difference of the radii of the external cutters (37) internal cutters (40).

2. Method as defined in claim 1, characterised in that the first radius (75, 90 resp. 98) is selected to be greater than the second radius (76, 91 resp. 99) in order to produce a positive tooth crown.

3. Method as defined in claim 2, characterised in that a portion of the cutter head axis (11) protruding out of the side of the tangential plane (14) facing away from the pitch surface (18) is inclined towards the pitch surface (18), for lessening the positive tooth crown.

4. Method as defined in claim 3, characterised in that the cutter head axis (11) is initially inclined in a vertical plane (27) which is perpendicular to the tangential plane (14).

5. Method as defined in claim 4, characterised in that the cutter head axis (11) is subsequently inclined into an inclined plane (30) having in common with the vertical plane (27) a line (28) which is parallel to the radius of curvature (24) and being inclined through a predetermined angle $\gamma$ with respect to the vertical plane (27).

6. Method as defined in claim 4, characterised in that the cutter head axis (11) is pivoted out of the vertical plane (27) into a further plane (31) having in common with a radial plane (25) a connection line (26) serving as a straight line of intersection with the tangential plane (14).

7. Method as defined in claim 6, characterised in that the cutter head axis (11) is inclined through an angle $\chi_1$ in the vertical plane (27) to an intersection line (29) with the further plane (31) and in the further plane (31) through an angle $\chi_2$ to an intersection line (29a) with the inclined plane (30), wherein the angle $\gamma$ of inclination for the inclined plane (30) is set in accordance with the angle $\chi_2$.

8. Method as defined in claim 1, wherein the cutter head (12) and the gear perform a generating movement about a generating drum axis (127) relative to one another, characterised in that a crown gear axis (161) is inclined relative to the generating drum axis (127) through a predetermined angle $\chi_3$ towards an operating pitch point (123).

9. Cutter head (106 and 108 resp. 107 and 109) for carrying out the method according to claim 1, in a mutal position with respect to a cutter head (107 and 109 resp. 106 and 108) for fabricating a mating gear, position in which an intersection point (105 resp. 156) of the cutter head axes (116 and 117 resp. 118 and 119) and pitch points (157 and 158 resp. 159 and 160) of a respective external cutting edge (110 resp. 111) and interal cutting edge (112 resp. 113) of respective cutters of said cutter heads (106 and 108 resp. 107 and 109) being located in a common pitch plane (120 resp. 121) and projections of the internal cutting edges (112 resp. 113) and the external cutting edges (110 resp. 111) upon a radial plane (25), which is disposed normal to the common pitch plane (120 resp. 121), extending at least approximately parallel to one another, characterised in that a radius difference (114 resp. 115) between said internal cutting edges (112 resp. 113) and external cutting edges (110 resp. 111) is existent and the cutter head axes (116 and 117 resp. 118 and 119) enclose an angle $\eta$ which is smaller than 180°.

## Revendications

1. Procédé pour réaliser des roues dentées à denture convexe longitudinalement par taille des flancs des dents, selon un procédé en continu, à l'aide d'une tête porte-outils (12) tournant autour d'un axe (11) de la tête porte-outils et munie d'outils (35, 36) comportant des arêtes de coupe extérieures et/ou intérieures (37, 40), la taille des deux flancs d'une gorge de dent se faisant au cours d'une seule opération comprenant les étapes suivantes :

— on incline l'axe (11) de la tête porte-outils par rapport à une perpendiculaire à un plan tangentiel (14) en un point courant (15) d'une ligne longitudinale de dent (20) d'une surface primitive (18) d'une dent, dans ou vers un plan (27, 30) qui est perpendiculaire ou sensiblement perpendiculaire au plan tangentiel (14) et au moins sensiblement parallèle à un rayon de courbure (24) de la ligne longitudinale (20) au point courant (15),

— on règle les outils (35, 36) de la tête porte-outils (12, 85) de façon que :

les points primitifs (73, 86, 96) des arêtes de coupe extérieures (79, 88, 94) se trouvent sur un premier cercle (75', 90', 98') ayant un premier rayon (75, 90, 98) et les points primitifs (74, 87, 97) des arêtes de coupe intérieures (80, 89, 95) se trouvent sur un second cercle (76', 91', 99') ayant un second rayon (76, 91, 99),

les arêtes de coupe extérieures (79, 88, 94) sont décalées d'un angle $\varepsilon_3$ et les arêtes de coupe intérieures (80, 89, 95) sont décalées d'un angle $\varepsilon_4$ à partir de la division angulaire régulière $\delta$,

les arêtes de coupe extérieures (37) ou les arêtes de coupe intérieures (40) forment, lorsqu'elles sont mises en œuvre, au passage du point courant (15, 38 et 41) un angle respectif $\alpha$, $\alpha'$ par rapport à une perpendiculaire (22') au plan tangentiel (14), la concavité efficace d'ensemble (LB) se composant d'une partie ($LB_R$ ou $LB_N$) de l'inclinaison de l'axe (11) de la tête porte-outils dans ou vers le plan (27, 30) et d'une partie ($LB_R$) des rayons différents des arêtes de coupe intérieure et extérieure (37 et 40).

2. Procédé selon la revendication 1, caractérisé en ce que le premier rayon (75, 90, 98) est supérieur au second rayon (76, 91, 99) pour générer une convexité positive.

3. Procédé selon la revendication 2, caractérisé en ce que l'axe (11) de la tête porte-outils est incliné par son segment (154) sortant de la surface primitive (18) du côté opposé du plan tangentiel (14), par rapport à la surface primitive (18) pour réduire la convexité positive.

4. Procédé selon la revendication 3, caractérisé en ce que l'axe de la tête porte-outils (11) est incliné tout d'abord dans un plan vertical (27) perpendiculaire au plan tangentiel (14).

5. Procédé selon la revendication 4, caractérisé en ce que la tête porte-outils (11) est ensuite inclinée dans un plan incliné (30) qui possède en commun avec le plan vertical (27) une parallèle (28) au rayon de courbure (24) et est inclinée d'un angle $\lambda$ par rapport au plan vertical (27).

6. Procédé selon la revendication 4, caractérisé en ce que l'axe (11) de la tête porte-outils est incliné par rapport au plan vertical (27) dans un autre plan (13) qui a en commun avec un plan radial (25) une ligne de liaison (26) comme droite d'intersection avec le plan tangentiel (14), plan par rapport auquel est incliné le plan (30).

7. Procédé selon la revendication 6, caractérisé en ce que l'axe (11) de la tête porte-outils est incliné d'un angle $X_1$ dans le plan vertical (27) suivant une ligne de coupe (29) et dans l'autre plan (31), d'un angle $X_2$ suivant une ligne de coupe (29a) par rapport au plan incliné (30), l'angle $\lambda$ du plan incliné (30) se réglant de manière correspondante à l'angle $X_2$.

8. Procédé selon la revendication 1, selon lequel la tête porte-outils (12) et le pignon denté effectuent l'un par rapport à l'autre un mouvement de roulement autour d'un axe de tambour de roulement (127), procédé caractérisé en ce que l'axe de roue planaire (161) est incliné par rapport à l'axe (127) du tambour de roulement d'un angle $X_3$ par rapport à un point courant (123).

9. Tête porte-outils (106 et 108, 107 et 109) pour la mise en œuvre du procédé selon la revendication 1, suivant une position de comparaison avec une tête porte-outils (107 et 109 ou 106 et 108) pour la réalisation d'un pignon opposé, selon lequel un point d'intersection (155 ou 156) des axes (116 et 117 ou 118 et 119) de la tête porte-outils et un point primitif (157 et 158 ou 159 et 160) de chaque fois une arête de coupe extérieure (110, 111) et de chaque fois une arête de coupe intérieure (112 ou 113) se trouvent dans un plan primitif commun (120 ou 121) et les projections des arêtes intérieures (112 et 113) et des arêtes extérieures (110 et 111) sont dans un plan radial (25) qui est perpendiculaire au plan primitif commun (120 ou 121) au moins approximativement parallèle, caractérisée en ce qu'entre les arêtes de coupe intérieures (112 ou 113) et les arêtes de coupe extérieures (110 et 111) il y a une différence de rayon (114 ou 115) et les axes (116 et 117 ou 118 et 119) des têtes porte-outils définissent un angle $\eta$ inférieur à 180°.

FIG. 1

FIG. 2

FIG. 3

FIG. 4

FIG. 5

4

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20